Europäisches Patentamt

(19) European Patent Office

Office européen des brevets

(11) Publication number: **0 104 941**
A2

(12) # EUROPEAN PATENT APPLICATION

(21) Application number: 83305785.4

(22) Date of filing: 27.09.83

(51) Int. Cl.³: **G 11 B 21/08**
G 11 B 21/10, G 11 B 19/28
//G11B5/58, G11B5/55

(30) Priority: 27.09.82 US 424914
15.03.83 US 475599
26.12.82 US 444523

(43) Date of publication of application:
04.04.84 Bulletin 84/14

(84) Designated Contracting States:
DE FR GB

(71) Applicant: QUANTUM CORPORATION
1804 McCarthy Boulevard
Milpitas California 95035(US)

(72) Inventor: Harrison, Joel N.
1190 Archer Way
Campbell California 95008(US)

(72) Inventor: Condito, Vincent A.
3608 Warner Drive
San Jose California 95127(US)

(72) Inventor: Graham, Randolph H.
1020 Live Oak Drive
Santa Clara California 95001(US)

(72) Inventor: Nixon, Brian J.
4804 Knox Gate Court
Pleasanton California 94566(US)

(72) Inventor: Simonsen, Richard C.
1625 Tanglewood Court
Pleasanton California 94566(US)

(74) Representative: Meddle, Alan Leonard et al,
FORRESTER & BOEHMERT Widenmayerstrasse 4/I
D-8000 München 22(DE)

(54) Data storage devices.

(57) A data storage device (20) comprises a unitary base casting (21); a plurality of data storage disks (26a, 26b, 26c and 26d), at least one disk having a servo sector prerecorded with two series of alternating servo bursts; a brushless direct current drive motor (24) mounted to the base for rotating the disks; data transducers (63a, 63b, 63c, 63d, 63e, 63f, 63g, and 63h) mounted on a rotary carriage (28); a thermally isolated rotary actuator (40) for moving the carriage means and thereby the transducers; an optical encoder (70) having a housing incorporating a light source (82) and a photodiode array (93) and a scale (100) movable between the source and the array in response to movement of the carriage (28); a peak detector for detecting peak amplitudes of the servo bursts; and programmed digital computer means including an analogue to digital converter for converting the outputs of the photodiode array and peak detector to digital values; processor means for controlling movement of the actuator, via a digital to analogue converter, by counting data track boundaries from the digitised photodiode array signals and track centreline offset values from the digitised servo burst signals to move the transducers between data tracks in accordance with instructions from a user interface and to maintain the transducers in track centreline alignment in accordance with the calculated offset values.

./...

EP 0 104 941 A2

FIG. I

"Data Storage Devices."

The present invention relates to data storage devices, more particularly, disk data storage devices.

Small rotating rigid disk drives are known in the art. The Applicants pioneered the development of a high capacity, low cost eight inch (20.32 cm) rigid disk drive known in the trade as the Q2000 (Trade Mark) series of disk drives. Such drives have been very successful. Various facets thereof are set forth in the Applicants U.S. Patent Applications Serial No. 06/190,198 filed September 24, 1980 (now U.S. Patent No. 4,396,959) and 06/424,914 filed September 27, 1982 (corresponding to the Applicants copending European Application, a copy of the specification of which has been placed in the file of the present Application. = EP 83305784.7)

While the Applicants eight inch (20.32 cm) rigid disk drive product line has been very well received, a need has arisen for a five 1/4 inch (13.34 cm) rigid disk drive which combines of very high data storage capacity and very small physical packaging, reliability and low cost.

According to one aspect of the present invention, there is provided a disk data storage device comprising: a base; a data storage disk; a motor mounted to the base for rotating the disk; at least one data transducer for reading data from and writing data to a storage surface of the disk; transducer carriage means for supporting the data transducer relative to the storage surface; actuator means for moving the carriage means to move the transducer between tracks on the storage surface; optical track boundary encoder means comprising a housing, means mounted to the housing for emitting photons, a photodetector array mounted to the housing for receiving photons from the emitting means and a translucent scale having equally spaced apart opaque regions, the scale being arranged to move relative to the housing between the emitting means and the photodetector array as the carriage means moves relative to the base, the photodetectors providing output signals which are phase shifted relative to each other; and processor means incorporating means for determining peak values from each photodetector, comparing each peak value with a predetermined nominal value, calculating a difference value and outputting a signal to adjust the level of the photons emitted by the emitting means for each photodetector whenever its electrical value is read by the processor means so that each photodetector puts out a corrected signal, the processor means being further connected to control the movement of the actuator means to provide the peak light values and to move the transducer between the data tracks in accordance with each said corrected photodetector signal.

According to a second aspect, there is provided a data storage device comprising: a base; a data storage disk; a motor mounted to the base for rotating the disk; at least one data transducer for reading data from and writing data to data tracks on a storage surface of the disk, a servo sector on the disk being prerecorded with two series of servo bursts; transducer carriage means for supporting the data transducer relative to the storage surface; actuator means for moving the carriage means to move the transducer between data tracks; a optical encoder means including a housing, means mounted to the housing for emitting photons, a photodetector array mounted to the housing for receiving photons from the emitting means, a translucent scale having equally spaced-apart opaque regions movable between the emitting means and the photodetector array, the housing and the scale moving relative to each other as the carriage means moves relative to the base and the photodetectors providing output signals phase-shifted relative to each other peak detector means for measuring the peak amplitude of each servo burst read by the transducer as it passes over the servo sector; programmed digital computer means comprising analogue to digital converter means, processor means connected to the analogue to digital converter means, and digital to analogue converter means connected to the processor means, the peak detector means and the photodetectors being connected to the analogue to digital converter means so that the peak servo burst amplitudes and the output signals from the photodetectors are converted to digital values; analogue actuator driver means connected to the digital to analogue converter means for applying digitally commanded current values to the actuator means to move the transducer(s), the processor means being connected to command and control directly movement of the actuator means by determining and counting data track boundaries from the digitized photodetector output signals and by calculating track centreline offset correction values from the digitized peak servo burst amplitudes to move the transducer(s) between data tracks in accordance with commands from a user interface and to maintain the transducer(s) in alignment with the centreline of a selected data track(s) in accordance with the calculated offset correction values.

In a third aspect, the present invention provides a data storage device comprising: a base; a brushless direct current motor mounted to the base and having internal non-contacting commutation sensors and an index sensor; at least one data storage disk directly mounted to the motor for rotation and having a plurality of concentric data tracks on a storage surface thereof and a servo sector containing two prerecorded sequential bursts equally offset radially from a centreline of each track; at least one data transducer for reading data from and writing data to the data tracks and for sequentially reading the servo sector bursts; a rotatable transducer carriage for supporting the transducer; a pure torque generating rotary actuator assembly journalled to the base for rotating the transducer carriage; an optical encoder assembly comprising a housing journalled to the base to enable rotational and axial alignment and containing a light source and an array of masked photodetectors, a scale mounted to the transducer carriage having alternating translucent and opaque regions which pass between the light source and the photodetectors, and wherein the photodetectors are phase-shifted relative to the translucent and opaque regions; an electronic motor driver power switching circuit connected to drive the brushless direct current motor; an electronic rotary actuator power driver circuit connected to operate the rotary actuator assembly; an analogue peak detector circuit connected periodically to the transducer to receive each servo sector burst in sequence and to register an analogue value corresponding to the amplitude peak of each said burst; and processor means for receiving data from the commutation sensors and the index sensor of the brushless direct current motor and calculating and providing binary commutation signals to the power switching circuit to operate the brushless motor, for receiving analogue data in the form of track boundary data from the photodetectors and track centreline data from the peak detector and converting the data to digital values, and for receiving track selection information from a user interface, calculating and putting out digital track selection values to the rotary actuator power driver circuit to cause the rotary actuator to move the transducer to a desired data track and to maintain the transducer in centreline alignment with the track during reading and writing operations and for further measuring differences in the response characteristics of the photodetectors and for calculating and sending light level correction values to the light source to compensate for the differences.

The present invention also provides, in another aspect, a data storage device comprising; a base; a data storage disk; a motor mounted to the base for rotating the disk; at least one data transducer for reading data from and writing data to data tracks on a storage surface of the disk; transducer carriage means for supporting the data transducer relative to the storage surface; actuator means for moving the carriage means to move the transducer between the data tracks; track boundary optical encoder means having a housing movably secured to said base and including a scale secured to said carriage means, the housing being two parts formed of an upper part and a lower part, having a common longitudinal axis of alignment and rotation and having interlocking structures for maintaining the common axis, a scale secured to the carriage, a single light emitting diode energy source mounted in an axially aligned open chamber of the upper housing part for directing photons toward the lower housing part, a lateral surface on the lower housing part facing the energy source, the lateral surface defining a recessed region therein and having a plurality of raised plateaux disposed about the periphery of the surface beyond the recessed region, a photodetector array secured in the recessed region, a photo-optical mask aligned over the photodetector array and having corners resting upon and secured to the plateaux, the lower housing part having shelf means below and beyond the lateral surface, a printed circuit wafer secured to the shelf means and having a plurality circuit traces thereon connected to a connector cable, and connection wires bonded to the array and to the traces for connecting the array to the cable; and servo control means for controlling the actuator means from position information provided at least in part by the optical encoder means.

In a further aspect, the present invention provides a data storage device comprising: a base; a data storage disk; a motor mounted to the base for rotating the disk, at least one data transducer for reading data from and writing data to data tracks on a storage surface of the disk; transducer carriage means for supporting the data transducer relative to the storage surface; actuator means for moving the carriage means to move the transducer between the data tracks; track boundary optical encoder means having a housing movably secured to the base and including a scale secured to the carriage means, the housing having a single longitudinal axis of alignment and rotation relative to the base and having a lower cylindrical portion defining a chamber, a pin secured to and extending from the base along the axis being seated in the said cylindrical portion, thereby enabling longitudinal and rotational alignment of the encoder relative to the base; and servo control means for controlling the actuator means from position information provided at least in part by the optical encoder means.

Thus, the present invention enables the provision of a small rotating rigid disk data storage device with a data storage capacity hitherto not achieved in comparably sized devices. Also, the present invention enables the provision of a small disk storage device having a fully digitally controlled transducer position servo system and an optical encoder for sensing data track boundaries which utilizes digital automatic gain control of the light source to compensate for variations in photodetector characteristics.

In a further aspect, the present invention provides a control device for a brushless direct current motor having a plurality of non-rotating field coils and including internal non-contacting commutation sensors, the motor being arranged to rotate at least one data storage disk, the device comprising: driver circuit means for switching drive current between the coils and for varying the drive current; programmed processor means for calculating switching commands in accordance with data provided by the commutation sensors and for putting out the switching commands to the driver circuit means for switching the drive current, and for monitoring motor speed and calculating speed correction values and putting the speed correction values out to the circuit means to adjust the drive current to maintain motor speed at a constant nominal value.

Another aspect of the present invention provides a data storage device comprising: a base; at least one data storage disk; a motor mounted to the base for rotating the disk; at least one data transducer for reading data from and writing data to data tracks on a storage surface of the disk; rotary transducer carriage means for supporting the data transducer relative to the storage surface; rotary actuator means for moving the carriage means to move the transducer between data tracks; and servo control means for controlling the rotary actuator from position information provided at least in part from data stored on said storage surface, the base being a unitary casting defining a disk region and a rotary actuator region, the motor being a brushless direct current motor mounted to the casting in a central opening in the disk region and directly driving the disk or disks on a common spindle, the rotary actuator region defining a generally rectangular well portion with an upwardly extending actuator journal centrally located therein, and the actuator means being generally right parallelopipedal in shape, and occupying the well portion surrounding the journal, the rotary carriage means being secured to the rotatable member, the arrangement being such that the base defines a continuous peripheral lip on which a gasket is seated and an airtight cover sealingly engages the gasket surrounding the disk or disks and carriage means.

Thus the present invention enables the provision of a digital controller for a brushless, electronically commutated direct drive disk motor.

Preferably, a plurality of digital processors are provided for parallel digital processing and control of electronic commutation of a brushless direct drive disk motor, rotary actuator position control of the data transducers, and digital compensation of the track boundary optical encoder.

Also, the present invention enables the provision of an improved and highly compact rotary actuator assembly which includes thermal isolation from the drive base casting and the provision of an improved and simplified optical encoder assembly which is easily installed and aligned.

Further an improved base casting for the drive which accommodates and registers the electro-mechanical elements within an enclosed, airtight environment and which supports the electrical components and provides for their interconnection and heat dissipation in an improved arrangement is envisaged by the invention as in the provision of a disk drive which includes an improved rotary actuator.

Conveniently, the present invention also enables a visual indication of relative track position of the data transducer to be provided through a window in the base casting cover. Moreover a disk drive in accordance with the invention may be a small, highly compact rotating disk data storage device which is easily assembled and adapted for robotic manufacture, and which achieves significantly greater storage capacities at lower costs than heretofore known.

For a better understanding of the present invention, and to show how the same may be put into effect, reference will now be made, by way of example, to the accompanying drawings, in which:

FIGURE 1 is an exploded perspective view of major mechanical and electrical components of a disk drive in accordance with the present invention;

FIGURE 2 is a top plan view of the disk drive shown in Figure 1;

FIGURE 3 is a sectional view along line 3-3 in Figure 2 of the disk drive of Figures 1 and 2;

FIGURE 4 is a top plan view of a "bow-tie" rotor of a rotary actuator of the disk drive;

FIGURES 5a to 5g are views of various components of an optical encoder assembly of the disk drive;

FIGURE 6 is a simplified overall block diagram of the disk drive;

FIGURE 7 is a detailed block schematic diagram of a motor control digital processor and drive motor of the disk drive;

FIGURES 8a to 8c are flowcharts showing the logical steps carried out by the motor control digital processor depicted in Figure 7;

FIGURE 9 is a detailed block diagram of an actuator controller digital processor of the disk drive;

FIGURE 10 is a waveform diagram of signals put out by the optical encoder;

FIGURES 11a to 11f are flowcharts illustrating the logical steps followed by the actuator controller digital processor depicted in Figure 9;

FIGURE 12 is a detailed block diagram of input-output circuitry of the disk drive; and

FIGURE 13 is a detailed block diagram of read-write circuitry of the disk drive.

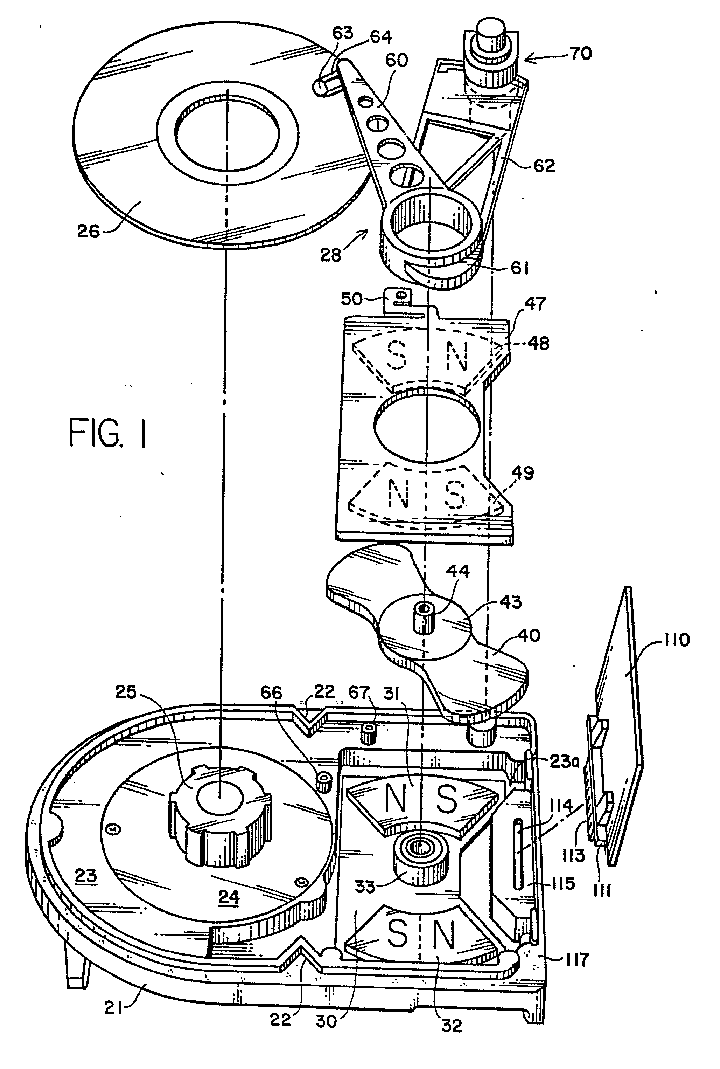

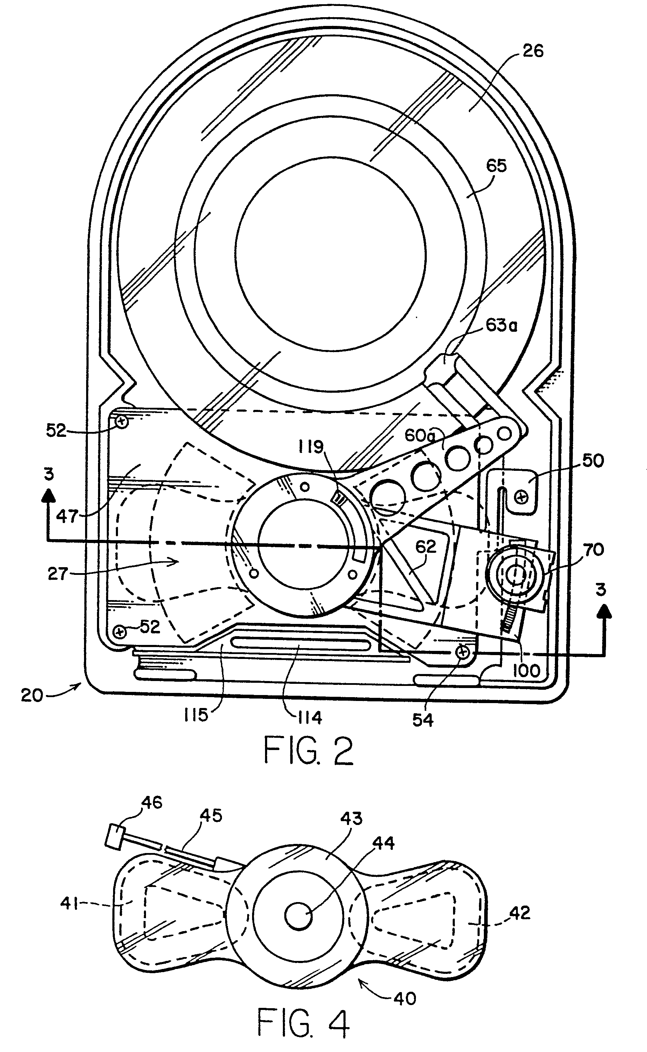

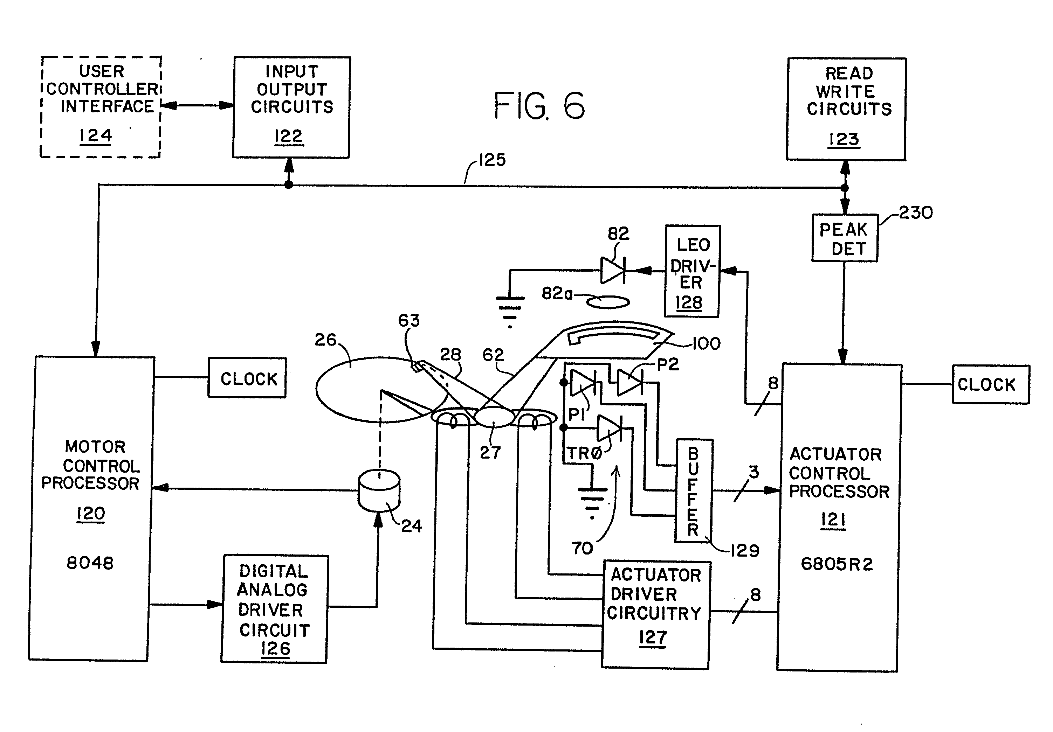

Referring now to the drawings, a disk drive system 20 is depicted structurally in Figures 1 to 5 and electrically in Figures 6 to 13. The structural components of the drive 20 will be described first, followed by a description of the electrical components and their interconnection and operation.

The disk drive 20 comprises a data storage system utilizing rigid rotating disk data storage media and data transducers flying in close proximity to the major surface data storage regions of the disks, sometimes referred to as Winchester technology. The drive 20 provides a very high data storage capacity up to approximately 40 million bytes with for example, four 5 1/4 (13.34 cm) rigid data storage disks within in a small, compact size, for example 3.3. inches (8.4 cm) wide, by 5.9 inches (15 cm) high, by 8.5 inches (21.6 cm) deep, the same general dimensions of the standard 5.25 (13.34 cm) inch mini-floppy disk data storage device, such as the Shugart Associates' SA 400 (Trade Mark) series floppy disk drives. While the present system 20 is intended to serve the so-called 5 1/4 inch (13.34 cm) rigid disk drive marketplace, the principles apply with the same force to systems employing either larger or smaller storage disks and greater or fewer numbers of disks. Also while the present system 20 may be used with one storage disk, practical economies of cost-per-byte of storage capacity render the two, three and four disk versions of the system 20 most practical.

The present system 20 uses a periodically closed loop servo system including an optical encoder putting out two quadrature phase signals to provide track boundary information, and centreline offset servo sector bursts for track centreline information. The general servo principles employed by the system 20 are taught in the Applicants U.S. Patent Application Serial No. 06/190,198 filed September 24, 1980 corresponding to U.K. Patent Application Publication No. 2083926A, reference to which should be made for further information.

## Structural Description

Referring now to Figures l to 5, the drive system 20 is formed upon a cast aluminium base 21 which registers and aligns all other electro-mechanical components. The base 21 is divided by two notches 22 into a semi-cylindrical disk region 23, and a rotary actuator well region 23a. The notches 22 are provided to facilitate robotic automatic handling and assembly of the system 20. The base 21 is shock mounted to user equipment by shock mounts (not shown) to provide necessary mechanical isolation to the system 20.

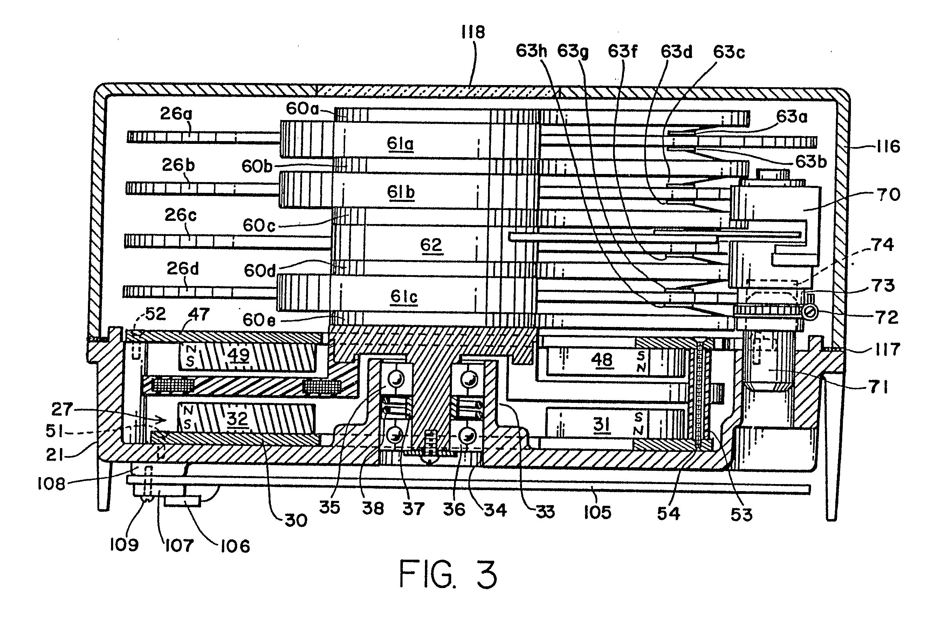

A three phase brushless (electronically commutated) direct current motor 24 is mounted in a central opening of the disk region 23 of the base 21. The motor 24 directly drives a disk hub 25 to which storage disks 26a, 26b, 26c, and 26d (Figure 3) are mounted in a parallel, equally spaced apart arrangement. The motor 24 rotates the disks 26 at a constant, for example counter clockwise, angular velocity of, for example, 58 revolutions per second in order to accommodate a servo sector while maintaining a data storage capacity equal to drives not having the sevo sector.

The rotary actuator well region 23a provides a generally rectangular recess for the components of a rotary actuator assembly 27 which rotates a data transducer carriage assembly 28. The components of the actuator assembly 27 include a steel magnetic field return base plate 30 to which two arcuate bar magnets 31 and 32 are glued. The magnets 31 and 32 are formed of a suitable ferro-ceramic and are magnetized with north-south poles in a sense normal to the plane of the plate 30, as indicated by the "N" and "S" (for north and south, respectively) labels in Figure 3. The fields are inverted at the midpoint of each magnet, as indicated by the "N" and "S" labels in Figure 1.

A cylindrical column 33 portion of the base casting 21 extends upwardly in the actuator well 23a. The column 33 has a cylindrical axial bore 34. Two bearing assemblies 35 and 36 are glued in the bore 34 in vertical axial alignment. They are separated from each other by a spacer 37, and a spring 38 urges them into proper alignment while the glue is setting.

The moving member of the actuator 27 is a rotor 40 in the general shape of a bow tie. The bow-tie rotor 40 includes two opposed trapezoidal field coils 41 and 42. Each coil is formed of, for example, 150 turns of 27 gauge insulated copper wire. The coils 41 and 42 are fully encapsulated in a suitable plastics resin molding compound which is selected for electrical insulation and thermal conduction. A metal hub 43 and shaft 44 are molded integrally with the coils 41 and 42 to form the rotor 40. A four conductor connector cable 45 provides an electrical path from the coils 41 and 42 to an external plug 46.

A top magnetic flux return plate 47 encloses the rotor 40 within the actuator assembly 27. The top plate 47 includes two arcuate bar magnets 48 and 49 having fields aligned as shown in Figures 1 and 3. The top bar magnets 48 and 49 are aligned to be directly over the lower magnets 31 and 32 respectively. The top plate 47 also includes a zee portion 50 which provides for mechanical attachment to the base casting 21 while also providing thermal isolation to the top plate 47 and the bottom plate 30, as will be explained hereinafter.

The rotor 40 lies in a gap between the magnet pairs. The rotor shaft 44 extends through the bearings 35 and 36. A shoulder on the shaft 44 cooperates with a washer and screw to lock the rotor to the bearings to maintain precise alignment of the rotor relative to the magnets.

Uniform thermal isolation of the upper plate 47 and lower plate 30 relative to the base casting 21 is provided. The ferromagnetic plates 30 and 47 which are made of low carbon steel have a different coefficient of expansion than the cast aluminium base.

To overcome the warp and distortion problems presented by differential thermal expansion of the plates relative to the base, the plates 30 and 47 are anchored to the base 21 at one end, and to each other at the other, zee portion 50, end. Thus, the bottom plate 30 is connected by two screws 51 to the base casting 31 and the top plate 47 is connected to the base casting 21 by two screws 52 at the same end as the bottom plate 30. The plates 30 and 47 are joined together at the other end by two spacers 53 and two long screws 54.

The plates are connected to the base casting 21 at the other end only by the zee portion 50 which thereby acommodates thermal expansion differentials between the plates 30 and 47 and the base casting 21, without causing any structural stresses or changes in critical alignment within the rotary actuator assembly 27. A gap of approximately 20 thousandths of an inch (0.5mm) exists between the lower plate 30 and the floor of the actuator well region 23a of the base casting 21. This gap is provided by providing a slight shoulder on the floor at the region of the screws 51. This gap ensures that thermal isolation will be achieved by the rotor assembly without concern for variations in base castings encountered in mass production. It also removes any necessity for machining of the actuator well region 23.

Five data transducer arms 60a, 60b, 60c, 60d and 60e are mounted to the rotor hub 44 in vertical axial alignment with each other and within equaly spaced apart parallel planes. The arms 60 are separated by three counterweights 61a, 61b, and 61c, and by a scale arm 62. The counterweights 61 counterbalance the transducer assembly 28 so that pure torque is generated by the rotor 40 and so that the bearings 35 and 36 are evenly and uniformly loaded, thereby minimizing the tendency to develop flat spots and run out problems.

The arms 60 support and register eight flying-head read/write data transducers 63a, 63b, 63c, 63d, 63e, 63f, 63g and 63h (transducer 63e is not shown in Figure 3., being obscured by the scale arm 62). The read/write transducers 63 are urged toward their respective storage surfaces by beam springs 64. The force exerted by each spring 64 is overcome by the aerodynamic characteristic of each transducer 63, so that it flies over the disk surface, and only comes into actual contact with it at an inner landing zone 65. The carriage assembly 28 formed by the arms 60, counterweights 61 and scale arm 62, is normally biased toward the landing zone by a tension spring (not shown). An inner crash stop 66 limits the excursion of the carriage assembly toward the disk hub 25, and an outer crash stop 67 limits excursion away therefrom. The crash stops 66 and 67 comprise elastomeric bumpers which are contacted by the lowermost transducer support arm 60e.

An optical encoder 70 is mounted to the base casting 21 by attachment to a cylindrical vertical post 71. A clamp 72 around a slotted cylindrical base portion 73 secures the encoder 70 to the post 71. The base portion 73 defines an interior cylindrical chamber which is deeper than the vertical post 71, leaving a vertical gap 74 to accommodate vertical alignment of the encoder. Rotational alignment of the encoder is accomplished by rotating the encoder 70 about the post 71 with the clamp 72 released.

In fabrication of the disk drive 20, the encoder 70 is assembled and then mounted to the post 71. The clamp 72 is then tightened, and the encoder 70 and post 71 assembly is then attached to the base casting 21, and the post 71 is glued in its seat in the base casting with the optical encoder 70 held in proper rotational alignment. Should realignment of the encoder 70 subsequently be required during final checkout or maintenance, such is easily accomplished by release of the clamp 72, readjustment of the encoder 70, and retightening of the clamp 72. Release of the clamp 72 is thus seen to facilitate both vertical and horizontal-rotational alignment of the encoder assembly 70.

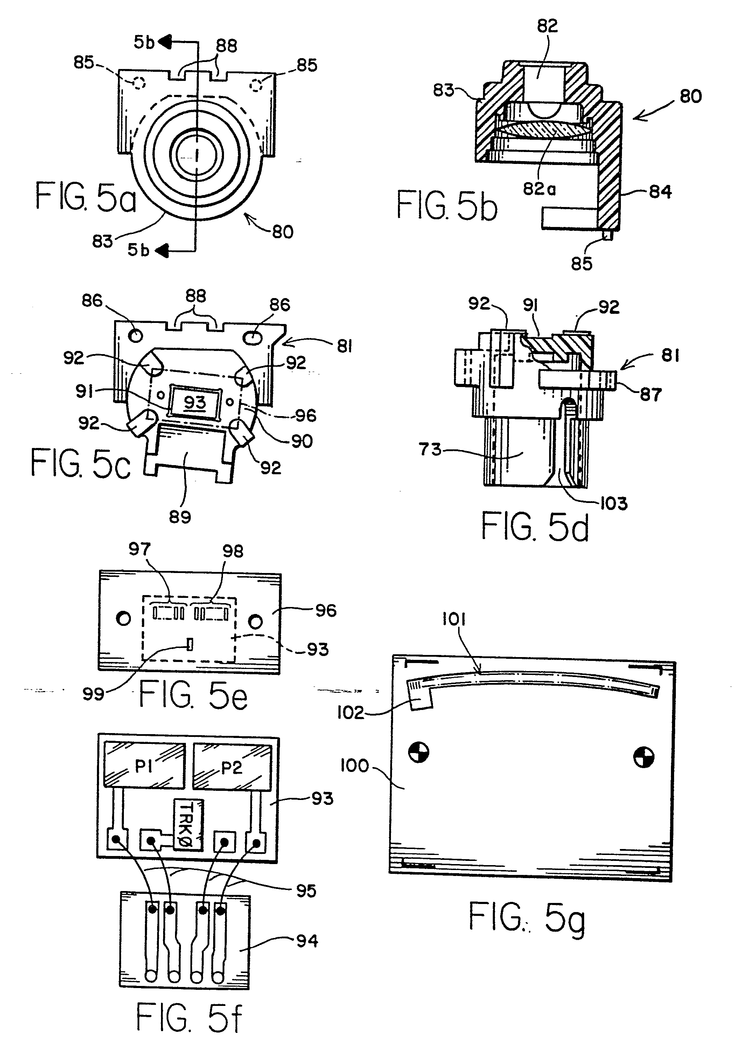

The encoder 70 is illustrated in detail in Figures 5a to 5g. The encoder 70 comprises a top member 80 (Figures 5a and 5b) and a bottom member 81. The top member 80 houses a light emitting diode 82 and a lens 82a to focus and collimate the emitted energy photons toward the lower member 81.

'The top member 80, shown in Figures 5a and 5b, has a generally cylindrical body 83 and a back wall 84 which carries two pin-like protrusions 85 which mate with aligned recesses 86 in a back wall portion 87 of the bottom member 81. Two grooves 38 are formed in the back of the backwall 84 and the backwall 87. The grooves 88 contain and dress the electrical leads from the LED 82 down the backwalls 84 and 87.

The top member 80 and the bottom member 81 are formed of an injection molded thermoplastics material, and are glued together with a suitable adhesive at the commonly contacting portions at and adjacent to the pins 85 and mating slots 86.

As shown in Figures 5c and 5d, the bottom member 81 includes a lower shelf 89. It also has a somewhat rectangular shaped upper face 90 slightly above the shelf 89. The face 90 includes a central rectangular recess 91 and four raised peripheral segments 92 generally located at the corners of the face 90.

The recess 91 holds and aligns an integrated photodetector array 93, shown greatly enlarged in the top plan view of Figure 5f. The array 93 includes three photodiodes, a P1 diode, a P2 diode and a TRK 0 diode. The P1 and P2 diodes are longitudinally adjacent each other, and the smaller TRK 0 diode is inset and between the P1 and P2 diodes.

The lower shelf 89 formed in the lower member 81 holds a small, four-land printed circuit connector board 94. Fine wires 95 are bonded between connection pads on the array 93 and the land of the printed circuit board 94. A four conductor cable (not shown) connects to the circuit board 94 to provide a structurally rugged electrical connection from the array 93. The array 93 and the printed circuit board 94 are glued to the recess 91 and the shelf 89, respectively, in the lower member 81.

A reticle (mask) 96 is mounted over the array 93 in alignment therewith by having its corners glued to the four raised segments 92 of the face 90. The reticle 96, shown greatly enlarged in Figure 5e, is made of thin glass sheet with a silver opaquing film deposited thereon. There are three sets of openings in the film of the reticle 96: two sets 97 and 98 of, for example 10, parallel openings corresponding in alignment to the P1 and P2 diodes, and a single opening 99 corresponding to the TRK 0 diode.

A scale 100 (Figure 5g) formed of thin glass sheet with silver radial microlines 101 deposited thereon is glued to the scale arm 62. The scale 100, is orientated so that it passes through a horizontal slot in the encoder 70 formed betwen the upper 80 and lower 81 members thereof so that its microlines 101 are in optical registration with the opening sets 97 and 98 of the reticle 96, except that the opening sets 97 are phrase shifted by 90 degrees with respect to the sets 98 so that the encoder 70 generates output signals in phase quadrature.

An opaque region 102 on the scale is aligned with the opening 99 for the TRK 0 diode. Light from the emitter diode 82 reaches the TRK 0 diode on the array 93 except when the scale 100 is at its left limit and the opaque region 102 blocks off the opening 99 thereby indicating that the transducers 63 have reached the radially outermost data track, referred to as "Track 0".

Slots 103 (Figure 5d) are formed in the cylindrical portion 73 of the lower member 81 to enable the encoder 70 to be clamped to the post 71 by the clamp 72, as already explained.

A main printed circuit board 105 is secured to the outside of the base casting 21, as shown in Figure 3. The circuit board mounts and connects the electronic components described hereinafter, including two microprocessors. Some components, such as monolithic power driver arrays 106, require effective thermal dissipation for proper operation. To accommodate effective heat transfer to the base casting, a local heat sink 107 is secured to a shoulder 108 of the base casting by screws 109 which engage threads in the shoulder 108.

A small printed circuit interconnect board 110 (Figure 1) provides a series of connection pins (not shown) to which the head transducers 63, optical encoder 70 and the coils 41 and 42 of the bow-tie rotor 40 are connected by plugs, such as the plug 46. A small bracket 111 is secured to the board 110. The bracket 111 mounts to the base casting 21 by screws (not shown) so that connection lands 113 at the bottom of the board 110 pass through a slot 114 formed in the base casting 21. The lands 113 enter a connector mounted to the main printed circuit board 105 on the underside of the casting 21. The connection is seated in a space defined by an inset region 115 of the base casting 21. An elastomeric gasket (also not shown) between the bracket 111 and the base casting 21 provides an airtight seal at the slot 114.

A cast aluminium cover 116 encloses the upper portion of the disk system 20 so that the disks 26 and transducers 63 operate in a very clean (particle-free) environment. An elastomeric gasket 117 is placed between the cover 116 and an outer lip of the base casting 21 to provide for an airtight seal. A breather (not shown) enables air pressure within the enclosed space to equalize wih the ambient environment. An air filter (not shown) removes contaminating particles from airflow generated by centrifugal forces from the rotating disks.

A clear plastics circular window 118 directly above the rotary actuator assembly permits visual inspection of disk rotation and actuator movement. A calibration mark on the window 118, together with a track scale 119 on the uppermost transducer arm 60a, provide a relative indication of data track position, so that track selection operations may be checked by the user.

### Overview of Electrical Components

Referring now to Figure 6, the system 20 has four interactive, interconnected electrical subsystems: a motor control digital processor circuit incorporating a programmed digital microprocessor 120, an actuator controller digital processor circuit incorporating a programmed digital microprocessor 121, interface circuitry 122, and read/write circuitry 123. These subsystems receive command information from a user interface 124, from the motor 24, optical encoder 70, and data transducer 63d via an interconnecting control bus 125, and calculate control data which digitally operates the motor 24 via a motor driver circuit 126, and the rotary actuator 27 via an actuator driver circuit 127 to cause the carriage assembly 28 to move the transducers from track to track and to maintain the transducers within the boundaries of each selected data track. The optical encoder 70 is digitally trimmed and compensated by the processor 121 in conjunction with an LED driver circuit 128.

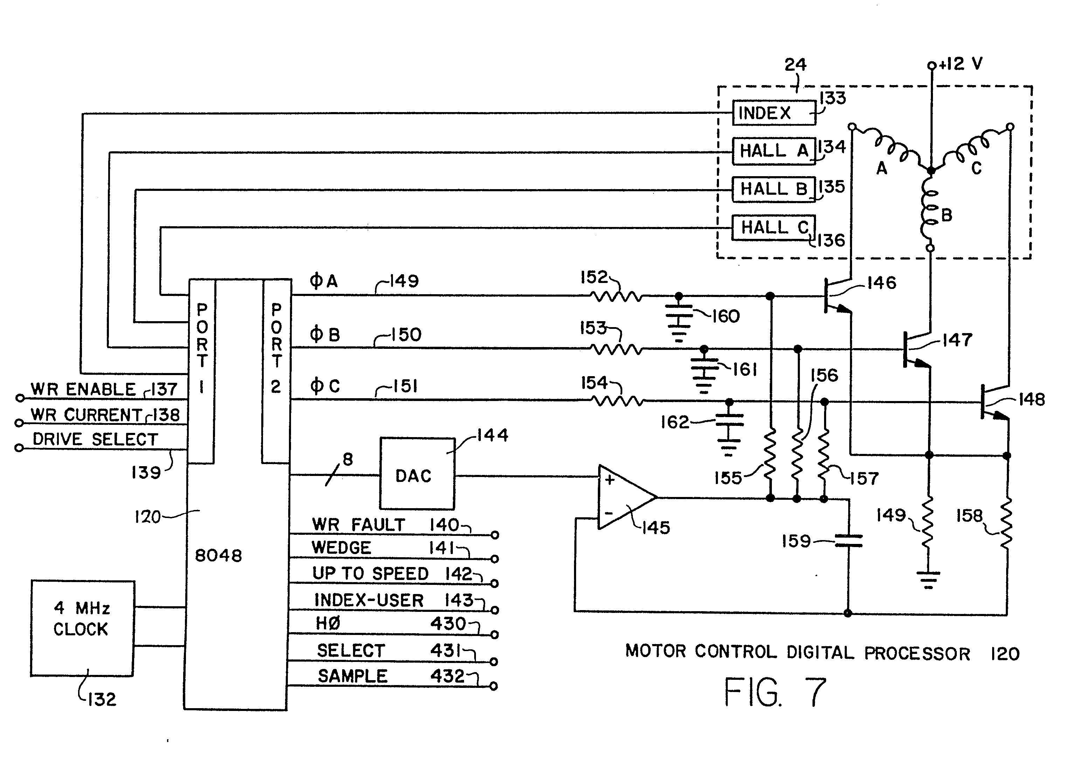

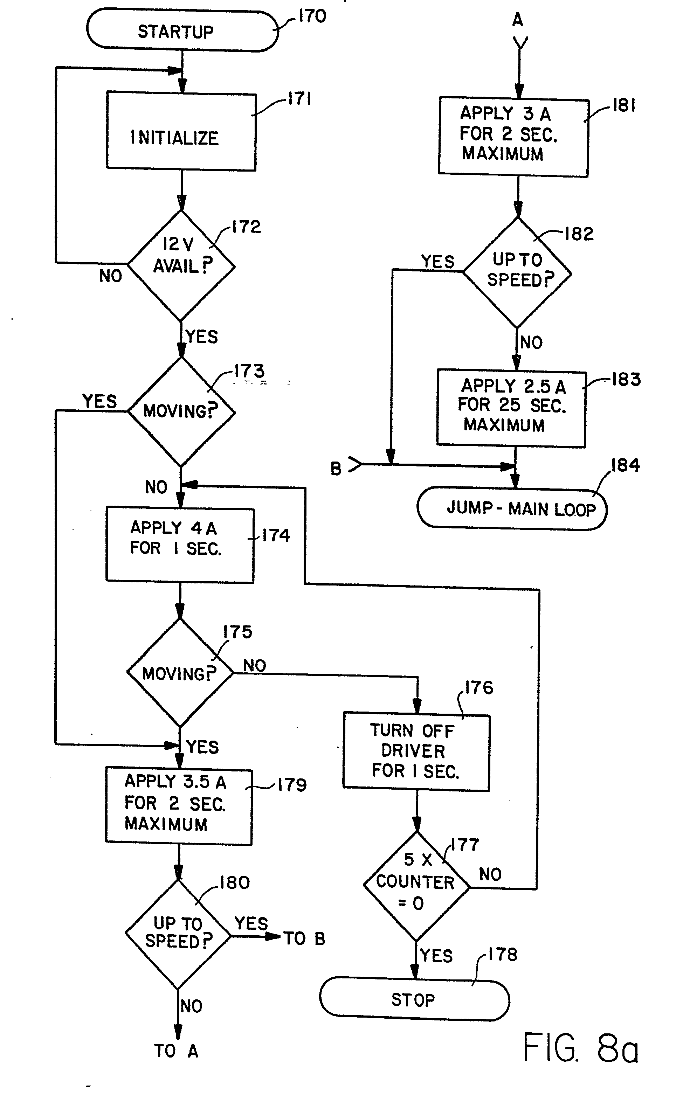

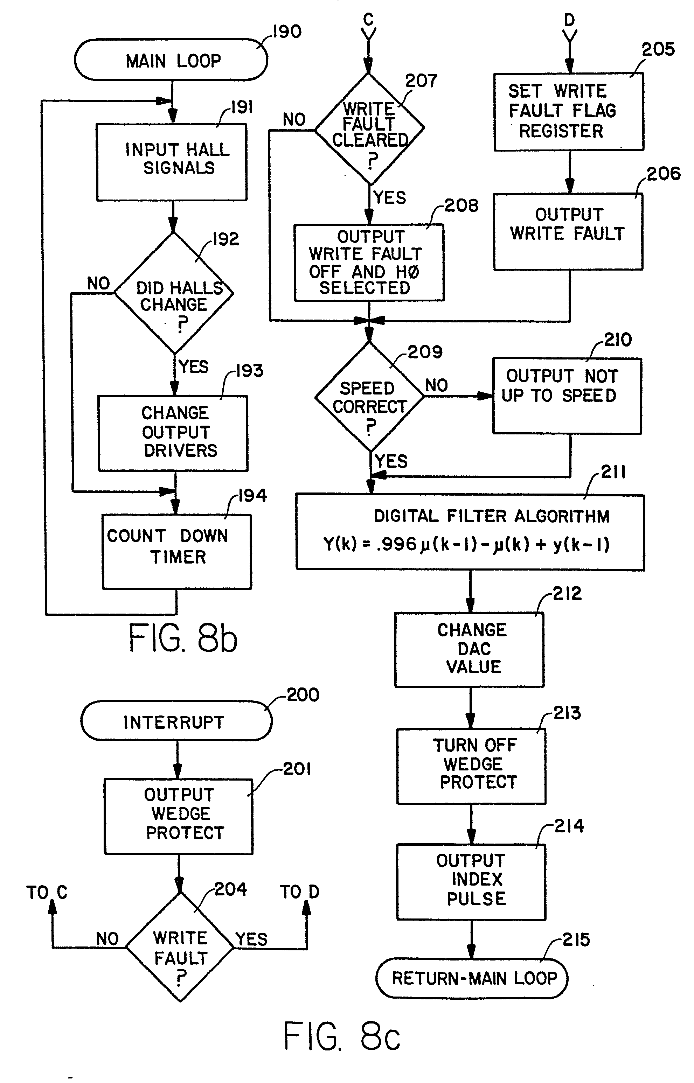

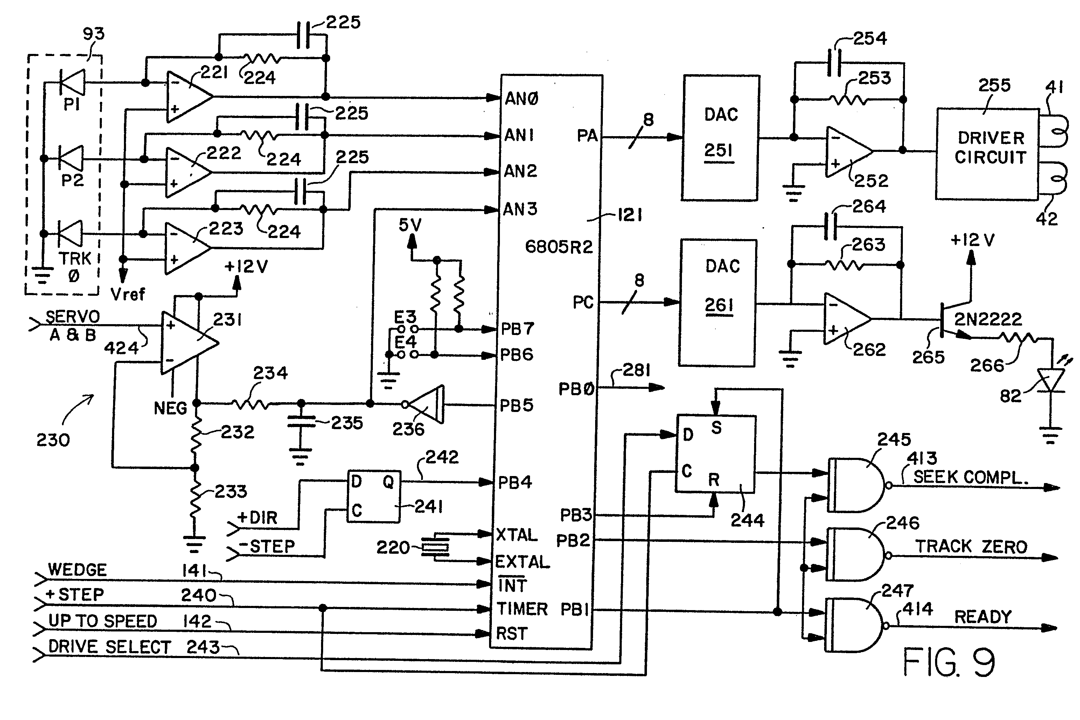

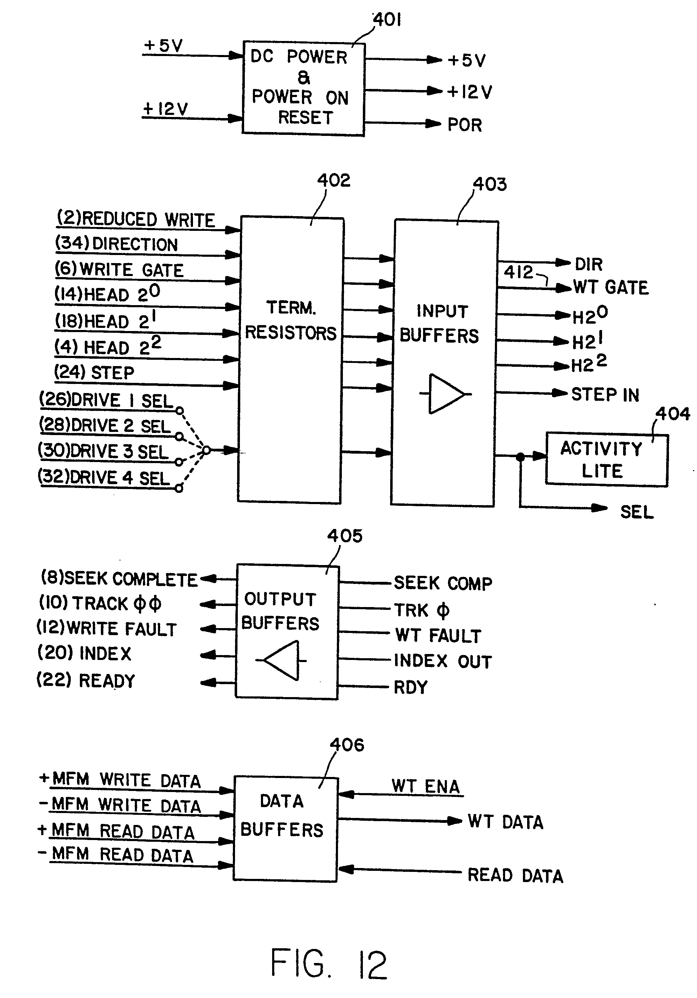

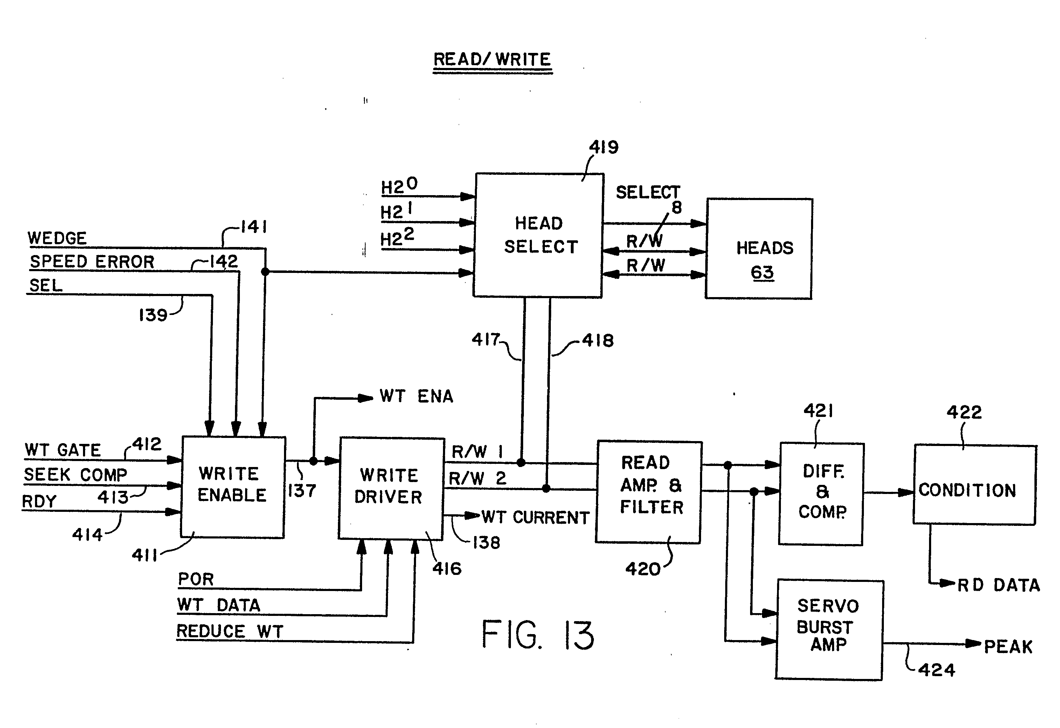

The motor control digital processor circuit will be described in hereinafter with reference to Figures 7 and 8; the actuator controller digital processor circuit with reference to Figures 9, 10 and 11; the interface circuitry 122 with reference to Figure 12; and the read/write 123 circuitry with reference to Figure 13.

### Motor Control Digital Procesor Circuit

The motor control digital processor circuit comprises the programmed digital microprocessor 120, preferably of the type 8048 manufac-tured by Intel Corporation, Santa Clara, California. The microprocessor 120 including an internal read only program memory which includes microcode written to carry out the flowchart steps depicted in Figure 8 and described hereinafter. The microprocessor 120 also includes internal storage registers and three eight bit parallel input/output data ports.

A crystal clock 132 connected to the microprocessor 120 is used to generate four megahertz clock pulses for the microprocessor 120. Seven single bit data inputs are provided to the microprocessor 120 via one of the inout/output ports, for example port 1. Four bits are from sensors within the brushless dc motor 24: an electro-optical index sensor 133, and three Hall effect transducers 134, 135, 136. The Hall transducers provide phase information to the microprocessor 120 to enable it to switch driving currents in the field windings of the motor 24 in order to achieve electronic commutation.

The Hall A, B, and C signals from the sensors 134, 135 and 136 correspond to the phases of the three-phase motor. For example, they may be 30 degrees apart, and as the drive hub 25 rotates each 30 degrees, a transducer will change data state. This change of state is read by the microprocessor 120, and it calculates a switching matrix which appropriately drives the motor 24 over the next 30 degrees of rotation by putting out three phase binary drive signals $\phi A$, $\phi B$ and $\phi C$ at a second port, for example Port 2.

The motor microprocessor 120 also receives binary inputs from the interface circuitry 122 including a write enable signal via a line 137, a write current signal via a line 138, and a drive select signal via a line 139.

In addition to the 0A to 0C signals, the microprocessor 120 also puts out seven single bit control signals: a write fault signal via a line 140, a wedge control signal via a line 141, an up-to-speed signal via a line 142, a user index signal via a line 143, a $H\phi$ signal via a line 430, a select signal via a line 431 and a sample signal via a line 432.

The microprocessor 120 also calculates and puts out an eight bit motor speed control data word to a digital to analogue converter (DAC) 144 via, for example Port 3. The DAC 144 converts the word to a voltage. The voltage is applied to the plus input of an operational amplifier 145, configured as a tranconductance amplifier.

The motor 24 includes three internal stationary field windings A, B, and C in a "Y" connection. The common node is connected to a power supply, for example plus 12 volts, DC. Three Darlington connected NPN power switches 146, 147 and 148 have their open collectors connected to windings A, B, and C, respectively. The switches may each be a type TIP 100 Darlington amplifier, made by Texas Instruments, or equivalent. While the switches 146, 147 and 148 are depicted in Figure 7 as single transistors for simplicity, it is to be understood that in practice, Darlington connected power amplifiers are preferred because of the required amplification factor. The emitters of the Darlington switches 146, 147 and 148 are commonly connected through a reference sense resistor 149 to ground, to complete the electrical path for the windings A, B and C of the motor 24.

The microprocessor 120 puts out the three phase commutation signals $\phi$A, $\phi$B and $\phi$C via three lines 149, 150 and 151 which are respectively connected to the bases of the Darlington switches 146, 147 and 148 through three series resistors 152, 153 and 154.

Three resistors 155, 156 and 157 are commonly connected to the output of the amplifier 145. These three resistors are respectively connected to the bases of the Darlington switches 146, 147 and 148. The actual current passing through the windings A, B and C is modulated by the current at the bases of the three control Darlington switches 146, 147 and 148 and the state of the commutation signals $\phi$A, $\phi$B and $\phi$C. These three control currents in turn are determined by currents passing through the three series resistor networks formed of resistors 152 and 155, 153 and 156, and 154 and 157, respectively.

The minus input to the amplifier 145 is connected to the sense resistor 149/common emitter node via a resistor 158. Actual motor voltage at the sense resistor 149 is thus applied to the operational amplifier 145. The speed correction voltage from the DAC 144 (which is calculated digitally by the microprocessor 120) is also applied to the amplifier 145.

Correctional current flows at the output of the amplifier 145 whenever the actual motor voltage and the correction voltage do not correspond. This current either adds to, or substracts from, the current provided to the bases of the Darlington switches 146, 147 and 148, depending on whether the motor is rotating too fast or too slow. In this way, the modulation of drive current by digital processing in the processor 120 provides an improved motor speed control in a brushless DC motor.

A feedback capacitor 159 configures the amplifier 145 as an integrator in order to stabilize the motor speed control servo loop. Also, three bypass capacitors 160, 161 and 162 connected to the bases of the Darlington switches 146, 147 and 148 effectively slow down the switching speeds thereof and further stabilize motor control and reduce generation of unwanted noise otherwise arising from sharp switching transients.

Motor Processor Control Program

The operation of the digital motor speed processor circuit will be further understood by considering the flowchart diagrams of Figures 8a, 8b and 8c. The first routine is startup 170. The microprocessor 120 clears all of its registers at an initialize step 171. It then tests for the availability of 12 volts DC at the power supply at a logical node 172. If 12 volts is unavailable, the startup routine loops back to initialize 171 and continues to loop until the correct voltage is available at the power supply.

When 12 volts is present, the startup routine advances to a logical node 173 which determines from the Hall sensors 134, 135 and 136 whether the motor 24 is rotating. If it is not rotating, the routine advances to a step 174 which applies high current, for example, 4 amps to the motor 24, for example, 1 second. Another logical node 175 tests rotation of the motor 24. If it is still not moving, drive current is turned off for one second and a counter in the microprocessor 120 is incremented at a step 176. A logical node 177 determines whether the counter has counted down to zero from a present number such as 5. If it has not, the routine returns to step 174 and the steps 174, 175, 176 and 177 are repeated for five trys. If the motor is still not rotating after five trys, then the logical node 177 advances to a stop step 178 which shuts down the device 20 and informs the host interface of a malfunction.

If the motor 24 is determined to be rotating at either of the steps 173 or 175, the startup routine advances to a step 179 which applies, for example, 3.5 amps for a two second interval to accelerate the rotation up to operating angular velocity in a reasonably short period of time. Whether the motor 24 is up to speed is tested at a logical node 180. If it is not, the rountine applies 3 amps for a two second interval at a step 181 and tests for motor speed at a logical node 182. If the motor 24 is still not up to operating speed, the routine applies 2.5 amps for a 25 second interval (maximum) at a step 183 and then jumps to the main routine at a jump step 184. In the event that the motor was up to speed as tested at the node 180, the routine jumps directly to the jump step 184. This completes the startup routine 170.

The main loop 190 is depicted in Figure 8b. The first step is to read the Hall A, B and C signals from the transducers 134, 135 and 136 and store the read values in an internal register of the microprocessor 120 at a step 191. A logical node 192 compares the presently read values with the stored values to determine whether the Hall signals have changed. If they have, the microprocessor 120 changes the matrix state of the ØA, B and C output signals which are controlling the Darlington switches 146, 147 and 148 at a process step 193.

The motor microprocessor 120 also then monitors the state of input lines including write current, write enable and drive select in order to determine if a write fault condition exists. This test sets the state of the output write fault line and is explained in more detail hereinafter.

If the Hall signals have not changed at the test 192, and following the step 193, the microprocessor 120 enters a predetermined wait interval by counting a time interval at a step 194 and then loops back to the first step 191 of the main loop. the microprocessor 120 remains in the main loop until interrupted by an index signal from the index sensor 133. Thereupon, the microprocessor jumps to the interrupt routine 200.

The interrupt routine 200 is set out in Figure 8c. First, the processor puts out a wedge protect signal via the output line 141 at a step 201. This step interrupts the actuator control microprocessor 121, and it also inhibits any write operations at the read/write circuitry 122, in order to be sure that the servo sector is not overwritten.

The microprocessor 120 performs a check on the data writing function at a node 204 by exclusive-OR testing the write enable line 137 and the write current line 138. The write enable line 137 is from the user interface via the input/output circuitry 122 and the write current line 138 is from the write amplifier in the read/write circuitry 123. Both lines should be simultaneously enabled or disabled (logical high or low). If they arent, a fault condition exists, and a write fault flag is set in a register at a step 205 and put out on the line 140 at a routine step 206. If there is no write fault as determined at the node 204, the interrupt routine advances to a logical node 207 which tests whether the write fault flag register is cleared. If it is, the microprocessor puts out an HO signal at a step 208.

The interrupt routine then advances to a speed check node 209. If the motor 21 is not up to speed as checked at step 209, the microprocessor 120 sends a not up to speed flag via the line 142 at a step 210.

The routine then advances to a process step 211 which calculates a digital filter algorithm:

$$Y(k) = .996mu(k-1) - mu(k) + y(K-1)$$

wherein Y(k) is the digital motor speed correction value put out to the DAC 144, mu(k-1) is the previous error signal, mu(k) is the present error signal and y(k-1) is the previous motor speed correction value put out. This algorithm puts out a pole and zero combination which maintains desired loop speed with appropriate damping. The calculated value is then put out at a step 212.

The interrupt routine then disables wedge protect by changing the logical state of the line 141 at a step 213, and puts out a user index signal via the line 143 at a step 214. The interrupt routine then returns to the main loop at a step 215.

## Actuator Control Digital Processor Circuit

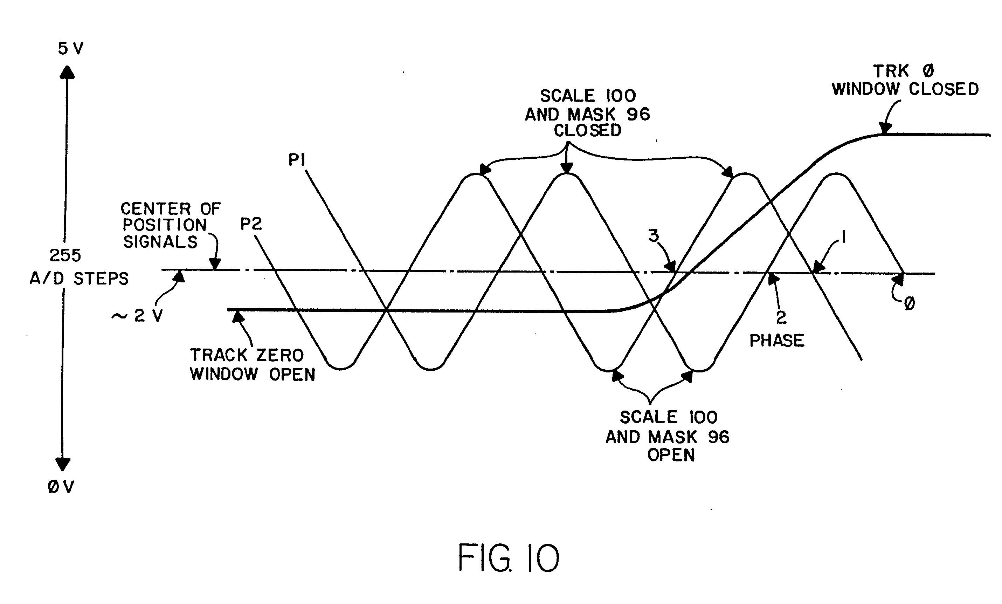

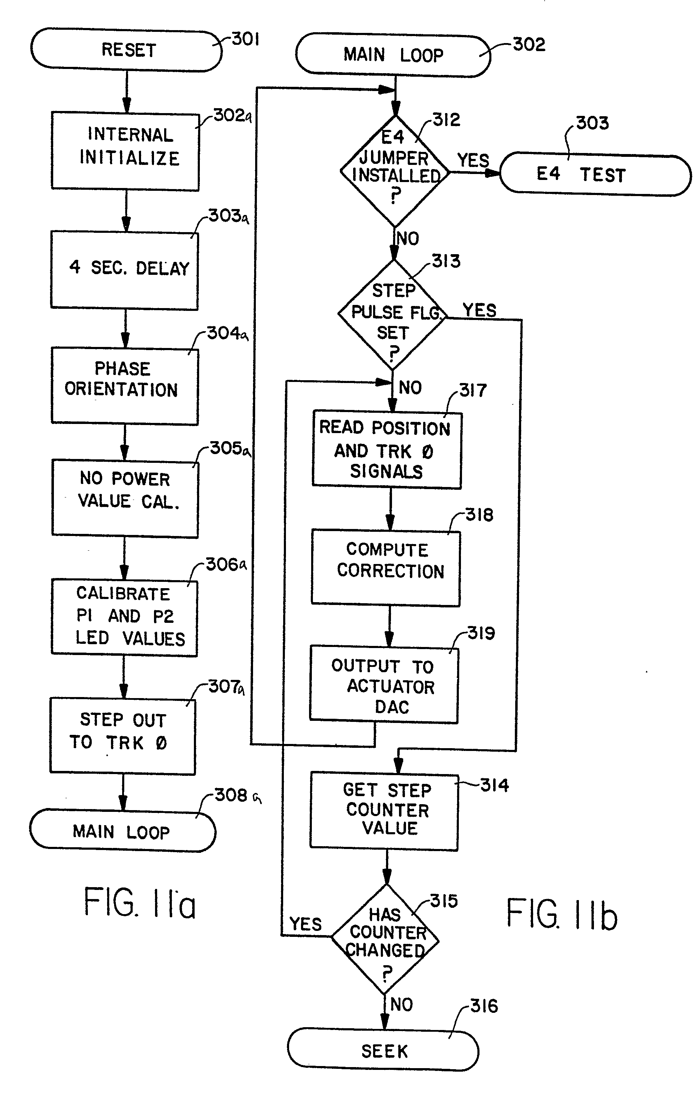

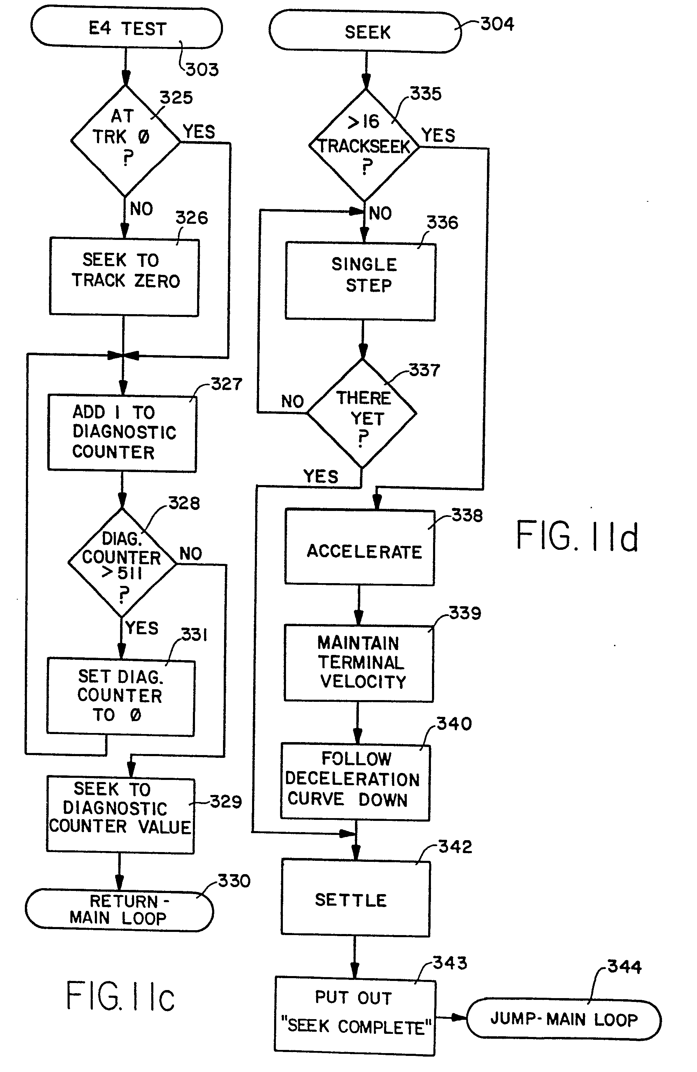

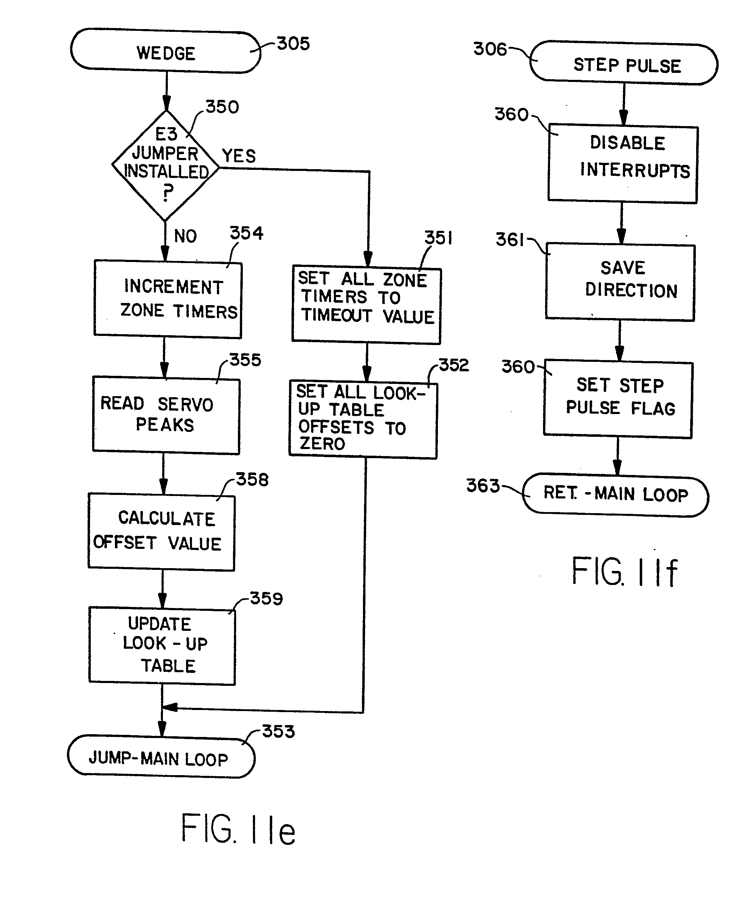

A more detailed illustration of the actuator control digital processor circuit is set forth in the Figure 9 circuit diagram, the Figure 10 waveform diagram and in the Figure 11 contro routine flowcharts.

While it is theoretically possible to use the 4 MHz clock of the motor control microprocessor 120, it has been determined that the 6805R2 microprocessor operates most reliably with its own crystal clock 220 which sets the clock frequency to four megahertz (4 MHz).

The P1, P2 and TRK 0 diodes of the photocell array 93 are connected to operational amplifiers 221, 222, and 223. Three equal value resistors 224 are connected from the output to the input of the operational amplifiers amp 221, 222 and 223 to establish a very high gain factor for each. Three capacitors 225 bridge the resistors 224 to stabilize and compensate the operational amplifier. The amplifiers 221, 222 and 223, the resistors 224 and the capacitors 225 are preferably mounted on the interconnect circuit board 110. The outputs of the operational amplifiers are connected through the circuit board lands 113 to circuit traces on the main printed circuit control 115 leading to three multiplexed analogue inputs AN0 - AN2 of the microprocessors 121. Those inputs are connectable sequentially to the internal analogue to-digital converter within the microprocessor 121.

Another analogue input to the microprocessor 121 on analogue input AN3 comes from the read-write circuitry 123 via a line 424 which supplies the sequential A and B servo sector bursts read from the servo sector once each revolution. The A and B bursts are sine waves whose respective amplitude peaks are compared by the microprocessor 121 in order to determine centreline offset and calculate a correction value.

The A and B bursts are first processed by a peak detector circuit 230 comprising a comparator 231 connected as shown. Two resistors 232 and 233 form a voltage divider network which provides a reference voltage to the comparator 231. A resistor 234, in series with a capacitor 235 forms a charging network. The capacitor 235 is charged to the peak of each burst A abd B. An open collector NAND gate 236 is connected from a binary data port of the microprocessor 121 to the capacitor 235 so that the microprocessor 121 may discharge the capacitor before it charges to each peak of an A or B servo burst.

Other data inputs to the actuator control microprocessor 121 include a Wedge pulse sent from the motor control microprocessor 120 on the line 141 to signal the beginning of the servo sector to the actuator microprocessor 121. Another input is the up-to-speed control signal from the motor microprocessor 120 via the line 142 which is connected to the reset input of the actuator microprocessor 121. In the event that the up-to-speed signal becomes false, the actuator microprocessor 121 is reset and begins a Reset routine 301, described hereinafter.

Stepping pulses from the user interface 124 come into the microprocessor 121 via a line 240. Direction of the stepping pulses is determined by a D-flip-flop 241 which latches the sign of the direction with the first stepping pulse received and sends that sign to the microprocessor via line 242. A drive select signal from the interface comes in on a line 243 to enable a seek complete D flip-flop 244 which is clocked by the stepping pulses and which is reset by the microprocessor 121. The drive select signal also enables three open collector NAND gates 245, 246 and 247. The gate 245 sends a seek complete signal to the user interface when drive select is true and the latch 244 is set. The gate 246 is true whenever the transducers are located at track zero, as determined by the optical encoder 70. The gate 247 provides a "ready" signal to the user interface whenever drive select is true and the microprocessor 121 has not detected an error. The "ready" signal merely indicates that the drive system 20 is ready to receive a track seek or read/write command from the interface.

The microprocessor 121 puts out data words to the actuator driver circuitry 127 and to the LED driver circuitry 128. The actuator driver circuitry 127 includes an eight bit digital to analogue converter 251 which puts out a current between zero and a reference current in 256 steps ($2^8$ steps). The current is converted to a voltage in an operational amplifier 252, the gain thereof being established by a resistor 253 and the stability thereof by a capacitor 254. The voltage is then provided to an analogue driver circuit 255 for the rotor coils 41 and 42. One suitable driver circuit is depicted in Figure 6 and discussed in connection therewith in the Applicants copending European Application a copy of the specification of which has been placed in the file of the present Application, corresponding to U.S. Patent Application Serial No. 06/424,914. A characteristic of the referenced driver circuit is that it passes no current through the rotor coils when the transducers are aligned with the centre line of a selected track. This reduces greatly the requirement for heat dissipation in the rotary actuator 27.

The LED driver circuit 128 comprises an eight bit digital to analogue converter 261 which sets a current between zero and a reference current in equal steps between 1 and 256. The set current is provided to an operational amplifier 262 located preferably on the interface circuit board 110. A resistor 263 and a capacitor 264 set the gain and provide the compensation for the amplifier 262. The current is amplified by a driver transistor 265 which is connected to drive the LED 82 through a current limiting resistor 266. Automatic gain control of the encoder 70 is described in connection with Figure 10.

Two jumper pin sets 271 and 272 provide test jumper connection points E3 and E4 for two diagnostic routines called by the control program (discussed hereinafter).

The microprocessor 121 puts out a reduce write current command via a line 281 to the read and write circuitry 123. Write current is reduced for the inside half of the data cylinders (tracks 256 - 511).

Actuator Control Program

Operation of the actuator controller digital microprocessor 121 will be further understood by consideration of the flowcharts set forth in Figures 11a to 11f. There are six separate routines in the control program for the actuator processor 121. These routines are Reset 301, Main Loop 302, Test 303, Seek 304, Wedge 305, and Step Pulse 306.

Referring now to Figure 11a, initialization and calibration of the microprocessor 121 within the environment of the system 20 occurs in the Reset routine 301. All of the internal registers of the 6805R2 microprocessors 121 are cleared to zero and power is removed from the actuator driver circuit 127 at a step 302a. A four second delay occurs at a step 303a. This delay enables the bias spring to return the carriage assembly 28 to the inner crash stop 66, so that the transducers 63 are at a known starting position inside the outermost track, track zero.

The two phase signals PI and P2 from the optical encoder 70 are electronically processed by the microprocessor 121 to generate four quadrature phase signals (see Figure 10, discussed below). Each signal represents a track. In the Reset routine 301 the microprocessor 121 must orientate itself to the proper phase. Thus, the microprocessor 121 commands the actuator 27 to move in a known direction, and the PI and P2 signals are monitored. Once phase zero, the desired phase, is reached, the microproessor locks onto that phase at a step 304a. Phase zero will always be reached within four tracks, as the four phases of the track servo system repeat each other sequentially.

The microprocessor 121 then calculates and stores a no-power compensation value for the actuator driver 127 at a step 305a. Ideally, the actuator driver 127 passes no current through the rotor coils 41 or 42 when a selected transducer 63 is located at the centreline of a selected track. (It should be understood that actual track centre may not be the indicated centre put out by the optical encoder phase signal (PI or P2) and the servo bursts A and B are used by the microprocessor 121 to adjust digitally the transducer position to reach true track centre). In practice, the carriage bias spring and slight electrical imbalances require a correction value to be calculated and provided to the actuator driver 127.

The microprocessor 121 digitally controls the amplitude of the LED source 82 in the optical encoder 70. The microprocessor commands the driving current put out by the LED driver 128. By controlling the LED amplitude the microprocessor 121 digitally compensates for differences in light sensitivities of the diodes PI and P2 of the array 93 without any need for electrical trimming, which was required by prior art quadrature encoders. In order to provide compensation to eliminate differences between the two cells, the LED output must be separately set for each diode

cell Pl and P2. The microprocessor 121 calculates compensation values for the Pl and P2 diodes and sets a reference value for LED nominal output at an encoder calibration step 306a.

Referring now to Figure 10, when the digital word sent to the LED DAC 261 is increased, the LED 82 puts out more light which results in a decrease in voltage level at the photo detector cells Pl and P2 and a smaller analogue to digital value converted and read within the microprocessor 121. Thus, the "positive" peaks of the Pl and P2 waveforms depicted in Figure 10 actually represent minimum light levels, and the "negative" peaks represent maximum light levels. An increasing light level drives each photodiode toward ground potential. The automatic gain control system does not attempt to control the peak absolute voltage values but it does calibrate the two negatives peaks which represent maximum light level. The relative amplitude of the TRK 0 cell is also depicted in Figure 10.

The microprocessor 121 directly commands the current flowing in the actuator 27 to servo on a selected phase 0, 1, 2 or 3 on an approximately linear portion of the selected phase signal in real time. The servo burst peaks A and B are used by the microprocessor to calculate correction values which keep the actuator servoed near the centre of the selected phase signal at the same time that the actuator has placed the transducer into track centreline alignment. In the improved digital servo systems there is no need to generate additional phase shifted control signals as was required in the Applicants prior U.S. Patent Application Serial No. 06/304,209.

The microprocessor 121 digitally calibrates the encoder 70 as follows: While servoing on one signal, for example P2, (which is ideally midway between the positive and negative peak in the most linear portion of the signal) the microprocessor 121 detects the negative peak value of the other phase signal, for example Pl. In practice the microprocessor 121 commands the rotary actuator 27 to microstep the transducer across a track until the Pl peak is reached and no longer increases in amplitude. The Pl peak is digitized in the microprocessor 121 and compared with a preset nominal LED peak value. If the actually read peak amplitude for Pl is not equal to the nominal peak value, the LED current is changed in the direction likely to render the Pl amplitude equal to the nominal value. The microprocessor 121 then commands a second microstep movement of the actuator 27 through the peak (window fully open) P1 position and re-reads the amplitude of P1. This procedure is repeated until a correction value is determined which renders the P1 amplitude equal to the nominal value. The process step 306a is then repeated for the P2 amplitude. The correction values for P1 and P2 are stored in internal memory locations of the microprocessor 121 and are called whenever P1 or P2 is selected during system operation.

Track zero negative peak amplitude is also read and stored at the calibration step 306a. As the temperature within the drive 20 increases, experience has shown that light levels of the LED 82 diminish. Thus, the track zero diode TRK 0 digitized amplitude is stored in the calibration step 306a as a nominal reference value. During the drive operation, the microprocessor 121 periodically compares the actual amplitude of the TRK 0 diode with the reference value. If drift occurs, then the microprocessor 121 recalculates the prestored compensation values for P1 and P2 in accordance with any measured drift in light level.

The microprocessor 121 then commands the actuator 27 to move to track zero (the outermost track) at a step 307a. At track zero, the TRK 0 diode goes to a maximum voltage (minimum current) condition, as shown in Figure 10. When track zero is reached, the microprocessor 121 identifies the phase zero servo signal from the encoder 70 by identifying the phase signal which has a negative slope on the trailing phase (P1) as the actuator moves out toward track zero. Track zero will always be a phase zero, and the phase zero is always identified as one of the four phases which occur during the transistion of the TRK 0 diode from window open to window closed (shown on the right side of the phase wavewform in Figure 10).

This completes the Reset (calibration) routine 301, and the microprocessor 121 then jumps to the main loop 302 at a jump step 308a.

Referring now to Figure 11b, the Main Loop 302 involves periodic status checking and updating of operational values. The diagnostic jumper E4 is checked at a step 312. If the jumper is in place, the internal Test routine 303 (Figure 11c) is called which is discussed hereinafter. If the jumper is not connected, the Main Loop advances to a logical node 313 which checks the status of the step pulse flag. If track step pulses have been received from the user interface 124, the microprocessor 121 reads the step pulse counter value at a step 314. The microprocessor then tests whether additional step pulses have arrived from the interface 124 at a logical node 315. If so, the processor returns to the main loop. If not, the program jumps to the Seek routine 304 at a jump step 316.

If the Step pulse flag is not set, as tested at the logical node 313, the microprocessor reads either the P1 or the P2 phase value at a step 317. The microprocessor also reads the TRK 0 signal at step 317. The microprocessor 121 then calculates a new position correction value based upon a previously determined desired position calculated from the A and B servo sector peaks at a step 318. The updated position correction value is put out to the actuator driver 127 at a step 319. The Main Loop then returns to the step 312 and repeats the steps thereof. Each pass through the Main Loop 302 (absent interrupts) takes approximately 200 microseconds. Thus, there may be approximately 85 passes through the Main Loop for each revolution of the disk 26.

If the E4 test jumper is installed, the Main Loop 302 branches to the Test Routine 303. The microprocessor 121 tests to see if the internal track counter has a value corresponding to track zero at a logical node 325. If not, a seek to track zero is commanded by the microprocessor at a step 326 which includes a call to the Seek routine 304 to accomplish the seek to track zero.

Once track zero is reached, a diagnostic track counter within the microprocessor 121 is incremented by one at a step 327. Then, the internal diagnostic track counter is tested at a logical node 328. If the transducer has not yet reached a count corresponding to the innermost data track (track 511), the microprocessor commands the actuator 27 to seek to the track number set in the diagnostic counter at a step 329. The step 329 actually calls the Seek routine 304 which steps the transducer inwardly by one track, and then the microprocessor 121 is returned to the Main Loop 302 at a return step 330.

If the diagnostic counter exceeds 511 (i.e. it has reached a count of 512), the diagnostic counter is reset to zero at a step 331 and the program returns to the step 327.

The Seek routine 304 (depicted in Figure 11d) is called at the step 316 whenever there has been a pass through the Main Loop 302 during which the step pulse flag has been set and no additional stepping pulses have been received. The track step pulse count in the stepping counter is tested at a logical node 335. Unless more than 16 stepping pulses have been received, the microprocessor enters a single track step mode at a node 336. Position is tested at a logical node 337. If the destination track has not yet been reached, the routine returns to the single step node 336 and repeats until the destination track is reached.

If the value stored in the track pulse counter exceeds 16 tracks, as tested at the node 335, a slow mode is commanded for the actuator 27 at an acceleration step 338. Terminal velocity is maintained for a predetermined time period at a step 339, and a deceleration curve, stored in a lockup table, is followed by the microprocessor 121 to place the actuator at the selected destination track at a step 340.

Once the destination track is reached, the actuator is permitted to settle or stabilize at a step 342 which monitors track centreline servo information. A "seek complete" signal is put out to the input/output circuitry 122 and to the user interface 124 at a step 343, and a return to the Main Loop 302 is then made at a jump step 344.

There are two possible interrupt routines called from the Main Loop 302. The first such interrupt routine is the Wedge (servo sector) routine 305 (Figure 11e). This routine 305 will be bypassed if a test jumper E3 is connected. If the test jumper E3 is connected, as tested at a logical node 350, all zone timers are set to timeout values at a step 351 and all lookup table offset values are set to zero at a step 352. The microprocessor 121 is then returned to the Main Loop 302 via a return node 353.

The Wedge routine 305 is called by the Wedge signal from the motor control microprocessor 120 which is put out on the line 141. This routine is thus normally called once per revolution of the disks 26 when the servo sector is reached by the servo transducer 63.

When the E3 Wedge routine bypass jumper is not installed, the zone timers are incremented at a step 354. A zone is a group of contiguous tracks, and zone timers are provided to trigger track centreline correction when the rotary actuator 27 is commanded to move a transducer to attract within a zone which has not been used for a predetermined time period of, for example, 5 minutes.

The Wedge routine 305 then causes the microprocessor 121 to read and digitize in succession the peak values of the A and B track centreline servo bursts sent from the read/write circuitry 123 to the microprocessor 121 at a step 355. The microprocessor then calculates new offset values at a step 358 and updates the centreline correction lookup table at a step 359. This correction value is used by the Main Loop 302 at the step 318, and the updated values are put out at the step 319. Once the track centreline correction lookup table has been corrected, the microprocessor 121 jumps to the Main Loop at a step 353.

The other interrupt routine is the Step Pulse routine 306 (Figure 11f). This routine 306 will be called at the leading edge of the first step pulse received by the microprocessor 121, and it disables any further interrupts thereby enabling the microprocessor 121 to accumulate all of the fast step pulses without being further interrupted by index or any other interrupt signal. Thus, when the Step Pulse routine 306 is called, the first step 360 is to disable all interrupts to the microprocessor 121. The direction of seek (in or out which is a plus or minus sign) is saved at a step 361. The step pulse flag is set at a step 362, and then the microprocessor is returned to the Main Loop 302 at a return step 363. This completes the description of the software architecture of the actuator microprocessor 121.

## Input/Output circuitry

A DC power and power on reset (POR) circuit 401 provides regulated voltages to the system 20 and a POR signal to the motor microprocessor 120. A terminating resistor array 402 terminates the lines from the user interface 124. Suitable input buffer circuitry 403 is connected to the incoming lines and the resistor array 402. Signals from the input buffers 403 circulate throughout the system 20. An activity light 404 may be provided should it be desired by the user. It operates in accordance with the drive select signal.

Output control signal buffers 405 and input/output data buffers 406 provide required isolation to control signals and data between the user interface 124 and the system 20.

## Read/Write Circuitry

The read/write circuitry 123 includes a write enable circuit 411 which receives the wedge signal via the line 141, the up to speed signal via the line 142, the drive select signal via the line 139, a write gate signal from the interface via a line 412, a seek complete signal via a line 413 from the actuator controller 121 and a ready signal from the actuator controller via a line 414.

The circuit 411 puts out a write enable signal via the line 137 to a write driver circuit 416. The write driver circuit receives a power on reset signal from the circuit 401, write data from the data buffers 406, and the reduce write current control signal from the actuator microprocessor 121 via the line 281. The write driver 416 puts out a write current logical signal via the line 138 and puts out data to be written onto two read/write lines 417 and 418 to a head select circuit 419.

The head select circuit 419 receives data transducer selection data from the input buffers 403 and selects one of the eight data transducers 63a to 63h.

Data is read from the disks 26 by a transducer 63 selected by the head select circuit 419. Read data passes on the lines 417 and 418 to a read amplifier and filter 420. The data is subjected to further conditioning in a differentiator and comparator circuit 421 and is then passed through a conditioning circuit 422 and then to the data buffers 406. A servo burst amplifier 423 recovers the servo bursts A and B and sends them on to the peak detector circuit 230 connected to the actuator controller 121 via a line 424.

The features disclosed in the foregoing description, in the following claims and/or in the accompanying drawings may, both separately and in any combination thereof, be material for realising the invention in diverse forms thereof.

CLAIMS:

1.    A disk data storage device comprising: a base; a data storage disk; a motor mounted to the base for rotating the disk; at least one data transducer for reading data from and writing data to a storage surface of the disk; transducer carriage means for supporting the data transducer relative to the storage surface; actuator means for moving the carriage means to move the transducer between tracks on the storage surface; optical track boundary encoder means comprising a housing, means mounted to the housing for emitting photons, a photodetector array mounted to the housing for receiving photons from the emitting means and a translucent scale having equally spaced apart opaque regions, the scale being arranged to move relative to the housing between the emitting means and the photodetector array as the carriage means moves relative to the base, the photodetectors providing output signals which are phase shifted relative to each other; and processor means incorporating means for determining peak values from each photodetector, comparing each peak value with a predetermined nominal value, calculating a difference value and outputting a signal to adjust the level of the photons emitted by the emitting means for each photodetector whenever its electrical value is read by the processor means so that each photodetector puts out a corrected signal, the processor means being further connected to control the movement of the actuator means to provide the peak light values and to move the transducer between the data tracks in accordance with each said corrected photodetector signal.

2.    A device according to Claim 1, wherein a servo-sector on the disk is prerecorded with two series of servo bursts and peak detector means are provided for measuring the peak amplitude of each servo burst read by the transducer.

3.    A data storage device comprising: a base; a data storage disk; a motor mounted to the base for rotating the disk; at least one data transducer for reading data from and writing data to data tracks on a storage surface of the disk, a servo sector on the disk being prerecorded with two series of servo bursts; transducer carriage means for supporting the data transducer relative to the storage surface; actuator means for moving the carriage means to move the transducer between data tracks;

optical encoder means including a housing, means mounted to the housing for emitting photons, a photodetector array mounted to the housing for receiving photons from the emitting means, a translucent scale having equally spaced-apart opaque regions movable between the emitting means and the photodetector array, the housing and the scale moving relative to each other as the carriage means moves relative to the base and the photodetectors providing output signals phase-shifted relative to each other peak detector means for measuring the peak amplitude of each servo burst read by the transducer as it passes over the servo sector; programmed digital computer means comprising analogue to digital converter means, processor means connected to the analogue to digital converter means, and digital to analogue converter means connected to the processor means, the peak detector means and the photodetectors being connected to the analogue to digital converter means so that the peak servo burst amplitudes and the output signals from the photodetectors are converted to digital values; analogue actuator driver means connected to the digital to analogue converter means for applying digitally commanded current values to the actuator means to move the transducer(s), the processor means being connected to command and control directly movement of the actuator means by determining and counting data track boundaries from the digitized photodetector output signals and by calculating track centreline offset correction values from the digitized peak servo burst amplitudes to move the transducer(s) between data tracks in accordance with commands from a user interface and to maintain the transducer(s) in alignment with the centreline of a selected data track(s) in accordance with the calculated offset correction values.

4.     A data storage device according to Claim 2 or 3, wherein the motor is a brushless direct current motor mounted to the base and has internal non-contacting commutation sensors and an index sensor and the actuator means comprises a pure torque generating rotary actuator assembly journalled to the base for rotating the transducer carriage; the device further comprising: a driver switching circuit means connected to drive the brushless direct current motor; and an electronic rotary actuator power driver circuit connected to operate the rotary actuator assembly, the analogue peak detector circuit being connected periodically to the transducer to receive each servo sector burst in sequence and to register an analogue value corresponding to the amplitude peak of each said burst, the processor means being connected for receiving data from the commutation sensors and the index sensor of the brushless direct current motor and calculating and providing binary commutation signals to the power switching circuit to operate the brushless motor, for receiving analogue data in the form of track boundary data from the photodetectors and track centreline data from the peak detector and converting the data to digital values, and for receiving track selection information from a user interface, calculating and putting out track selection values to the rotary actuator power driven circuit to cause the rotary actuator to move the transducer to a desired data track and to maintain the transducer in centreline alignment with the track during reading and writing operations and for further measuring differences in the response characteristics of the photodetectors for calculating and sending light level correction values to the light source to compensate for the differences.

5. A data storage device comprising: a base; a brushless direct current motor mounted to the base and having internal non-contacting commutation sensors and an index sensor; at least one data storage disk directly mounted to the motor for rotation and having a plurality of concentric data tracks on a storage surface thereof and a servo sector containing two prerecorded sequential bursts equally offset radially from a centreline of each track; at least one data transducer for reading data from and writing data to the data tracks and for sequentially reading the servo sector bursts; a rotatable transducer carriage for supporting the transducer; a pure torque generating rotary actuator assembly journalled to the base for rotating the transducer carriage; optical encoder means comprising a housing journalled to the base to enable rotational and axial alignment and containing a light source as a photon emitting means and an array of masked photodetectors, a scale mounted to the transducer carriage having alternating translucent and opaque regions which pass between the light source and the photodetectors, and wherein the photodetectors are phase-shifted relative to the translucent and opaque regions; an electronic motor driver power switching circuit connected to drive the brushless direct current motor; an electronic rotary actuator power driver circuit connected to operate the rotary actuator assembly; an analogue peak detector circuit connected periodically to the transducer to receive each servo sector burst in sequence and to register an analogue value corresponding to the amplitude peak of each said burst; and ponding to the amplitude peak of each said burst; and processor means for receiving data from the commutation sensors and the index sensor of the brushless direct current motor and calculating and providing binary commutation signals to the power switching circuit to operate the brushless motor; for receiving analogue data in the form of track boundary data from the photodetectors and track centreline data from the peak detector and converting the data to digital values, and for receiving track selection information from a user interface, calculating and putting out digital track selection values to the rotary actuator power driver circuit to cause the rotary actuator to move the transducer to a desired data track and to maintain the transducer in centreline alignment with the track during reading and writing operations and for further measuring differences in the response characteristics of the photodetectors and for calculating and sending light level correction values to the light source to compensate for the differences.

6. A device according to Claim 4 or 5, wherein the driver circuit means comprises a plurality of electronic switches each connected to a coil of the motor, the switches having a common voltage reference node, transconductance amplifier means having two opposed polarity inputs, with one input connected to the reference node, for outputting a signal to adjust the current passed by the electronic switches, the other input of the transconductance amplifier being connected to the processor means so that the operation thereof is responsive to the processor means as well as the voltage at the reference node.

7. A control device for a brushless direct current motor having a plurality of non-rotating field coils and including internal non-contacting commutation sensors, the motor being arranged to rotate at least one data storage disk, the device comprising: driver circuit means for switching drive current between the coils and for varying the drive current; programmed processor means for calculating switching commands in accordance with data provided by the commutation sensors and for putting out the switching commands to the driver circuit means for switching the drive current, and for monitoring motor speed and calculating speed correction values and putting the speed correction values out to the circuit means to adjust the drive current to maintain motor speed at a constant nominal value.

8.    A data storage device according to any one of Claims 4 to 6 wherein the processor means comprises a plurality of programmed microprocessors, one microprocessor for receiving data from the commutation sensors and the index sensor and for calculating and providing binary commutation signals to the power switching circuit, and a second microprocessor for controlling the rotary actuator power driver circuit and the emitting means wherein the said one microprocessor generates an index signal from the index sensor which interrupts operation of the said second microprocessor to enable it to read the peaks of the servo sector bursts.

9.    A device according to Claim 3 or 5, wherein the processor means is arranged to read peak light values from each photodetector in turn, to compare each read detected value with a predetermined nominal value and calculate a difference value and output a signal to adjust the level of the photons emitted by the photon emitting means for each photodetector whenever its output signal is read so that each photodetector puts out a corrected signal.

10.    A device according to any one of Claims 2 to 9, wherein the peak detector comprises an amplifier connected to receive the servo bursts and a capacitance connected to the amplifier to accumulate a charge proportional to the peak amplitude of each said servo burst.

11.    A device according to Claim 10 wherein the processor means is arranged to enable the capacitance to be discharged before each amplitude peak is accumulated therein.

12.    A data storage device comprising; a base; a data storage disk; a motor mounted to the base for rotating the disk; at least one data transducer for reading data from and writing data to data tracks on a storage surface of the disk; transducer carriage means for supporting the data transducer relative to the storage surface; actuator means for moving the carriage means to move the transducer between the data tracks; track boundary optical encoder means having a housing movably secured to said base and including a scale secured to said carriage means, the housing being two parts formed of an upper part and a lower part, having a common longitudinal axis of alignment and rotation and having interlocking structures for maintaining the common axis, a scale secured to the carriage, a single light emitting diode energy source mounted in an axially aligned open chamber of the upper housing part for directing photons toward the lower housing part, a lateral surface on the lower housing part facing the energy source, the lateral surface defining a recessed region therein and having a plurality of raised plateaux disposed about the periphery of the surface beyond the recessed region, a photodetector array secured in the recessed region, a photo-optical mask aligned over the photodetector array and having corners resting upon and secured to the plateaux, the lower housing part having shelf means below and beyond the lateral surface, a printed circuit wafer secured to the shelf means and having a plurality circuit traces thereon connected to a connector cable, and connection wires bonded to the array and to the traces for connecting the array to the cable; and servo control means for controlling the actuator means from position information provided at least in part by the optical encoder means.

13. A device according to any one of Claims 1 to 11 wherein the optical encoder comprises: a two part housing with an upper part and a lower part having a common longitudinal axis of alignment and rotation and having interlocking structure for maintaining the common axis, the emitting means being mounted in a cylindrical opening of the upper part in alignment with the axis and having a lens for focusing emitted photons toward the array, the lower part having a top surface defining a recessed region for mounting the array and a plurality of raised plateaux disposed peripherally about the surface beyond the recessed region, a photo-optical mask aligned over the photodetector array and having corners resting upon and secured to the plateaux, the lower part also including a shelf lying below and extending outwardly from the top surface, a printed circuit wafer secured to the shelf having a plurality of circuit traces thereon facing toward the upper part, the traces being connected to a connector cable and a plurality of connection wires being bonded to the array and to the traces for connecting the array to the cable.

14. A device according to any preceding claim, wherein the optical encoder includes a reference track photodetector, the scale provides a translucent region between the emitting means and the reference photodetector except in the vicinity of the reference track, and the processor means periodically measures the output signal of the reference photodetector when the emitting means is aligned with the translucent region and calculates a light level correction value to compensate for any change in characteristic energy level out put by the emitting means.

15. A device according to any preceding claim, wherein the optical encoder housing is journalled to the base to enable rotational and axial alignment.

16. A device according to Claim 15, wherein the housing of the optical encoder means comprises a lower cylindrical portion defining a cylindrical chamber in axial alignment with the journal, and a cylindrical pin secured to and extending from base provides the journal by seating in the cylindrical chamber.

17. A data storage device comprising a base, a data storage disk, a motor mounted to the base for rotating the disk, at least one data transducer for reading data from and writing data to data tracks on a storage surface of the disk; transducer carriage means for supporting the data transducer relative to the storage surface; actuator means for moving the carriage means to move the transducer between the data tracks; track boundary optical encoder means having a housing movably secured to the base and including a scale secured to the carriage means, the housing having a single longitudinal axis of alignment and rotation relative to the base and having a lower cylindrical portion defining a chamber, a pin secured to and extending from the base along the axis being seated in the said cylindrical portion, thereby enabling longitudinal and rotational alignment of the encoder relative to the base; and servo control means for controlling the actuator means from position information provided at least in part by the optical encoder means.

18. A device according to Claim 16 or 17, wherein a removable releasable clamp is provided for releasably securing the lower cylindrical portion to the pin.

19. A device according to any one of Claims 15 to 18, wherein the base defines a generally rectangular well containing the journal between the base and the optical encoder means, the well comprising a lower ferromagnetic flux return plate having an opening for the journal, two lower permanent magnets secured to the lower plate on opposed sides of the journal, a rotor seated in the journal and having two coils, each of which is aligned over a respective one of the lower permanent magnets, an upper ferromagnetic flux return plate having an opening for the rotor at the journal and two permanent magnets secured to the upper plate in alignment with the lower magnets and directly above the two coils of the rotor, each upper magnet having alternating fields which are aligned with alternating fields of the lower magnet aligned therewith.

20. A data storage device comprising: a base; a data storage disk; a motor mounted to the base for rotating the disk; at least one data transducer for reading and writing data from and to a storage surface of said disk; rotary transducer carriage means for supporting the data transducer relative to the disk storage surface; rotary actuator means for rotating the carriage means; servo means for controlling the rotary driver means at least in part by servo data read by the transducer from the disk storage surface; a journal between the base and the rotary driver means; a lower ferromagnetic flux return plate lying on opposite sides of the journal and within a common plane normal to the journal; a plurality of lower permanent magnets secured to an upper face of the plate on opposed sides of the journal; rotor means rotatably secured to the base at the journal having a locus of rotation not in excess of 90 degrees and having a plurality of opposed coils, each of which overlies a lower magnet means on opposite sides of the journal and is so constructed that the mass of the rotor is balanced about the journal; an upper ferromagnetic flux return plate lying on opposite sides of the journal above the rotor means; and a plurality of upper permanent magnets secured to a lower face of the upper flux return plate on opposed sides of the journal, each upper magnet means being in alignment with a lower magnet means and having a magnetic field in alignment with the field of the lower magnet means.

21. A device according to Claim 19 or 20, wherein the upper plate and the lower plate are secured to the base at one end of the actuator means and are commonly secured to each other at another end of the actuator means opposite the one end and an attachment means is provided for securing the upper and lower plates to the base at the said opposite end for accommodating relative movement between the plates and the base.

22. A device according to Claim 20, wherein the plurality of upper and lower magnets comprise two commonly sized and magnetized pairs of annular segments lying on opposite sides of the journal, and wherein the actuator means comprises two coils, each coil being rotatably situated between a pair of segments.

23. A data device according to any preceding claim, wherein the base defines a continuous peripheral lip, and further comprises a gasket seated on the lip and a cover surrounding the disk and carriage and sealingly engaging the gasket.

24. A data storage device comprising: a base; at least one data storage disk; a motor mounted to the base for rotating the disk; at least one data transducer for reading data from and writing data to data tracks on a storage surface of the disk; rotary transducer carriage means for supporting the data transducer relative to the storage surface; rotary actuator means for moving the carriage means to move the transducer between data tracks; and servo control means for controlling the rotary actuator from position information provided at least in part from data stored on said storage surface, the base being a unitary casting defining a disk region and a rotary actuator region, the motor being a brushless direct current motor mounted to the casting in a central opening in the disk region and directly driving the disk or disks on a common spindle, the rotary actuator region defining a generally rectangular well portion with an upwardly extending actuator journal centrally located therein, and the actuator means being generally right parallelopipedal in shape, and occupying the well portion surrounding the journal, the rotary carriage means being secured to the rotatable member, the arrangement being such that the base defines a continuous peripheral lip on which a gasket is seated and an airtight cover sealingly engages the gasket surrounding the disk or disks and carriage means.

25. A data storage device according to Claim 23 or 24, further comprising main circuit board means detachably mounted to the base outside the cover, auxiliary circuit board means detachably mounted to the base inside the cover and having an electrical connection providing portion extending through an opening in the base casting and mating with a plug on the main circuit board means, and sealing means for sealing the opening in the base casting when the auxiliary circuit board means is mounted to the base casting.

26. A data storage device according to Claim 25, wherein the main circuit board means includes heat generating electronic components which are thermally connected directly to the base.

27. A data storage device according to any one of Claims 23 to 26, comprising sealed window means in the cover adjacent the carriage means, and track position indicating means cooperating between the carriage means and the window means for providing a relative visual indication of track position of the transducer(s).

28. A data storage device according to any preceding claim, wherein carriage means comprises an arm having a circular portion for attachment to the actuator means and having an inwardly curved and tapered portion extending from the circular portion to an apex at or adjacently beyond the location of attachment of the transducer, a plurality of circular openings of diminishing diameter being disposed along the tapered portion between the circular portion and the apex.

FIG. I

FIG. 2

FIG. 4

FIG. 3

0104941

FIG. 5a

FIG. 5b

FIG. 5c

FIG. 5d

FIG. 5e

FIG. 5f

FIG. 5g

FIG. 6

MOTOR CONTROL DIGITAL PROCESSOR 120

FIG. 7

0104941

FIG. 8a

0104941

8/15

FIG. 8b

FIG. 8c

FIG. 9

FIG. 10

0104941

RESET — 301

MAIN LOOP — 302

INTERNAL INITIALIZE — 302a

4 SEC. DELAY — 303a

PHASE ORIENTATION — 304a

NO POWER VALUE CAL. — 305a

CALIBRATE PI AND P2 LED VALUES — 306a

STEP OUT TO TRK Ø — 307a

MAIN LOOP — 308a

FIG. IIa

E4 JUMPER INSTALLED ? — 312     YES → E4 TEST — 303

NO

STEP PULSE FLG. SET ? — 313     YES

NO

READ POSITION AND TRK Ø SIGNALS — 317

COMPUTE CORRECTION — 318

OUTPUT TO ACTUATOR DAC — 319

GET STEP COUNTER VALUE — 314

HAS COUNTER CHANGED ? — 315     YES

NO

SEEK — 316

FIG. IIb

E4 TEST — 303

AT TRK Ø ? — 325

YES →

NO ↓ 326

SEEK TO TRACK ZERO

ADD 1 TO DIAGNOSTIC COUNTER — 327

DIAG. COUNTER > 511 ? — 328

NO →

YES ↓ 331

SET DIAG. COUNTER TO Ø

SEEK TO DIAGNOSTIC COUNTER VALUE — 329

RETURN - MAIN LOOP — 330

FIG. 11c

SEEK — 304

>16 TRACKSEEK ? — 335

YES →

NO ↓

SINGLE STEP — 336

THERE YET ? — 337

NO →

YES ↓

ACCELERATE — 338

MAINTAIN TERMINAL VELOCITY — 339

FOLLOW DECELERATION CURVE DOWN — 340

SETTLE — 342

PUT OUT "SEEK COMPLETE" — 343

JUMP - MAIN LOOP — 344

FIG. 11d

WEDGE — 305

E3 JUMPER INSTALLED ? — 350

YES

NO

INCREMENT ZONE TIMERS — 354

READ SERVO PEAKS — 355

CALCULATE OFFSET VALUE — 358

UPDATE LOOK - UP TABLE — 359

SET ALL ZONE TIMERS TO TIMEOUT VALUE — 351

SET ALL LOOK-UP TABLE OFFSETS TO ZERO — 352

JUMP-MAIN LOOP — 353

FIG. 11e

306 — STEP PULSE

DISABLE INTERRUPTS — 360

SAVE DIRECTION — 361

SET STEP PULSE FLAG — 360

363 — RET. - MAIN LOOP

FIG. 11f

FIG. 12

# READ/WRITE

FIG. 13